# FASCICULE DE BREVET EUROPEEN

(11) **EP 3 774 402 B1**
(45) Date de publication et mention de la délivrance du brevet: **04.05.2022**
(21) Numéro de dépôt: 19719556.3
(22) Date de dépôt: 27.03.2019
(51) Int. Cl.: B60C 19/00, B60C 23/04

(54) **TRANSPONDEUR RADIOFREQUENCE POUR PNEUMATIQUE**
FUNKTRANSPONDER FÜR EINEN REIFEN
RADIO FREQUENCY TRANSPONDER FOR A TIRE

(30) Priorité: 30.03.2018 FR 1852838
(43) Date de publication de la demande: 17.02.2021
(73) Titulaire: COMPAGNIE GENERALE DES ETABLISSEMENTS MICHELIN, 63000 Clermont-Ferrand (FR)
(72) Inventeur: DESTRAVES, Julien, 63040 CLERMONT-FERRAND Cedex 9 (FR); CARO, Thomas, 63040 CLERMONT-FERRAND Cedex 9 (FR); CLERGEAT, Jean-Mathieu, 63040 CLERMONT-FERRAND Cedex 9 (FR); COUTURIER, Laurent, 63040 CLERMONT-FERRAND Cedex 9 (FR); PORTIER, Guillaume, 63040 CLERMONT-FERRAND Cedex 9 (FR)
(74) Mandataire: Roussy, Delphine
(86) Numéro de dépôt international: PCT/FR2019/050707
(87) Numéro de publication internationale: WO 2019/186067

(56) Documents cités:
- EP-A1- 0 505 905
- WO-A1-2009/134243
- WO-A1-2016/193457
- WO-A1-2017/046245
- DE-A1- 10 300 160

## Description

### Domaine de l'invention

La présente invention concerne un dispositif électronique de radio identification ou transpondeur radiofréquence apte à être fixé sur un objet à identifier subissant, en particulier en service, de fortes sollicitations thermo mécaniques comme un pneumatique.

### Arrière-plan technologique

Pour le domaine des dispositifs d'identification RFID (acronyme de Radio Frequency Identification), des transpondeurs à identification radiofréquences passifs sont classiquement utilisées pour l'identification, le suivi et la gestion d'objets. Ces dispositifs permettent une gestion automatisée plus fiable et plus rapide.

Ces transpondeurs à identification radiofréquences sont constitués généralement d'au moins une puce électronique et une antenne formée par une boucle magnétique ou une antenne rayonnante que l'on fixe à l'objet à identifier.

La performance de communication du transpondeur radiofréquence s'exprime par la distance maximale de communication du transpondeur radiofréquence avec un lecteur radiofréquence pour un même signal communiqué au ou par le lecteur radiofréquence.

Dans le cas des produits fortement extensibles comme par exemple les pneumatiques, un besoin existe d'identifier le produit tout au long de son existence depuis sa fabrication jusqu'à son retrait du marché et, en particulier, lors de son usage. Ensuite, afin de faciliter cette tâche, notamment en condition d'usage, une performance de communication élevée est requise qui s'exprime par la possibilité d'interroger le transpondeur radiofréquence à longue distance du produit, plusieurs mètres, par l'intermédiaire d'un lecteur radiofréquence. Enfin, on souhaite que le coût de fabrication d'un tel dispositif soit le plus compétitif possible.

On connait dans l'état de la technique, notamment d'après le document WO 2016/193457A1, un transpondeur radiofréquence passif apte à répondre aux besoins des pneumatiques. Ce transpondeur est constitué d'une puce électronique, connectée à un circuit imprimé sur lequel est électriquement connectée une première antenne primaire. Cette antenne primaire est couplée électromagntiquement à un ressort hélicoïdal mono brin constituant une antenne rayonnante dipode. La communication avec un lecteur externe radiofréquence utilise les ondes radioélectriques et en particulier la bande UHF, acronyme d'Ultra Hautes Fréquences. En conséquence, les caractéristiques du ressort hélicoïdal sont ajustées à la fréquence de communication choisie. Ainsi la disparition de jonction mécanique entre le circuit imprimé et l'antenne rayonnante améliore la tenue mécanique du transpondeur radiofréquence.

Cependant, un tel transpondeur radiofréquence présente des faiblesses. Bien que ce transpondeur radiofréquence est adaptée pour fonctionner à la fréquence de communication du lecteur externe radiofréquence dans un environnement de type pneumatique en particulier, le positionnement et le maintien en service de la partie électronique par rapport à l'antenne rayonnante est délicate et nécessite de la précision dans la manutention des transpondeur radiofréquences impactant le coût de revient du transpondeur radiofréquence afin que ceux-ci ne voient leur performance de communication se dégrader. De plus, il faut aussi préserver les autres performances du transpondeur radiofréquence tel que son intégrité physique ou l'endurance de l'objet à identifier qui l'accueillera comme une enveloppe pneumatique.

La présente invention porte sur un transpondeur radiofréquence passif et son procédé de réalisation visant à améliorer le compromis de performances des transpondeurs radiofréquences employés entre autres dans l'industrie du pneumatique.

### Description de l'invention

L'invention porte sur un transpondeur radiofréquence de type passif destiné à être intégré à un objet à identifier constitué d'un matériau fortement extensible tel un mélange ou composition élastomère. Ce transpondeur radiofréquence comprend tout d'abord une antenne rayonnante dipôle. Celle-ci est constituée d'un ressort hélicoïdal mono brin et présente un axe de révolution, un diamètre d'enroulement, un pas d'hélice, un plan médian et un diamètre de fil définissant des diamètres intérieur et extérieur de l'antenne rayonnante. Cette antenne rayonnante a une longueur L0 adaptée pour communiquer sur une bande de fréquence avec un lecteur à émission radiofréquence Ce transpondeur radiofréquence comprend aussi une partie électronique située à l'intérieur de l'antenne rayonnante. Cette partie électronique comprend une puce électronique, une antenne primaire connectée électriquement à la puce électronique et couplée électromagnétiquement à l'antenne rayonnante. L'antenne primaire présente tout d'abord un axe sensiblement parallèle à l'axe de révolution de l'antenne rayonnante et ensuite un plan médian qui est sensiblement superposée au plan médian de l'antenne rayonnante. Enfin l'antenne primaire est circonscrite dans un cylindre dont l'axe de révolution est parallèle à l'axe de l'antenne primaire et dont le diamètre est supérieur ou égal au tiers du diamètre intérieur de l'antenne rayonnante. Ce transpondeur radiofréquence est caractérisé en ce que, pour une première zone de l'antenne rayonnante où l'antenne rayonnante n'est pas située au droit de la partie électronique, un premier diamètre intérieur de l'antenne rayonnante correspondant au diamètre intérieur de l'antenne rayonnante dans cette première zone est inférieure à un deuxième diamètre intérieur de l'antenne rayonnante correspondant au diamètre intérieur de l'antenne rayonnante dans une deuxième zone située au droit de la partie électronique et en ce que la partie électronique est circonscrite dans un cylindre dont l'axe de révolution est parallèle à l'axe de révolution de l'antenne rayonnante et dont le diamètre est supérieur ou égal au premier diamètre intérieur de l'antenne rayonnante.

On entend ici par le terme « élastomère », l'ensemble des élastomères y compris les TPE (acronyme de Thermo Plastiques Elastomères), tels que par exemple les polymères diéniques, c'est-à-dire comprenant des unités diéniques, les silicones, les polyuréthanes et les polyoléfines.

On entend ici par le terme « couplage électromagnétique, », le couplage par rayonnement électromagnétique, c'est-à-dire le transfert d'énergie sans contact physique entre deux systèmes incluant d'une part le couplage inductif et d'autre part le couplage capacitif. L'antenne primaire est alors préférentiellement comprise dans le groupe comprenant : une bobine, une boucle ou un segment de fil ou une combinaison de ces éléments conducteurs.

Ici, on entend par le terme sensiblement parallèle que l'angle généré par les directions axiales de chaque antenne est inférieur ou égal à 30 degrés. Dans ce cas, le couplage électromagnétique entre les deux antennes est optimal améliorant notablement les performances de communication du transpondeur radiofréquence.

Ici, il convient d'abord de définir le plan médian de la bobine et du ressort hélicoïdal. Par définition, c'est un plan fictif séparant l'objet en deux parties égales. Dans notre cas, ce plan médian est perpendiculaire à l'axe de chaque antenne. Enfin, on entend ici par "sensiblement superposé" que la distance relative entre les plans médians est inférieure au dixième de la longueur L0 de l'antenne rayonnante.

Ainsi l'intensité du courant électrique étant maximal au centre de l'antenne rayonnante, le champ magnétique induit par ce courant est aussi maximal au centre de l'antenne rayonnante, on assure ainsi que le couplage inductif entre les deux antennes est optimal améliorant de ce fait la performance de communication du transpondeur radiofréquence.

En imposant les dimensions relatives de l'antenne primaire par rapport aux caractéristiques du ressort hélicoïdal de l'antenne rayonnante, on assure que la distance entre les deux antennes sera inférieure au diamètre de l'antenne primaire dans le cas où l'antenne primaire se situe à l'intérieur de l'antenne rayonnante. Ainsi on optimise le couplage inductif entre les deux antennes et de ce fait la performance de communication du transpondeur radiofréquence en émission et réception.

Enfin en assurant que le cylindre circonscrit à la partie électronique ayant un axe de révolution parallèle à l'axe de révolution de l'antenne rayonnante et un diamètre supérieur ou égal au premier diamètre intérieur de l'antenne rayonnante, la première zone de l'antenne rayonnante constitue donc une butée au déplacement axial de la partie électronique. Le fait que cette première zone se situe de part et d'autre de la zone de l'antenne rayonnante située au droit de la partie électronique en raison du positionnement centrée de la partie électronique par rapport à l'antenne rayonnante assure de disposer alors de deux butées mécaniques situées axialement extérieurement à la partie électronique limitant tout mouvement axial de la partie électronique du transpondeur radiofréquence De plus, le diamètre du cylindre circonscrit de la partie électronique étant situé à l'intérieur de l'antenne rayonnante au niveau de la deuxième zone, ce diamètre est nécessairement inférieur au deuxième diamètre intérieur de l'antenne rayonnante Ainsi, le déplacement radial de la partie électronique est bornée par le deuxième diamètre intérieur de l'antenne rayonnante. En conclusion, le mouvement de la partie électronique est limitée ce qui permet d'assurer la performance de communication du transpondeur radiofréquence tout en assurant une intégrité physique de la partie électronique et de l'antenne rayonnante du transpondeur radiofréquence. Enfin, l'endurance de l'objet accueillant ce transpondeur radiofréquence n'est pas non plus impacté par ce choix de conception. La manipulation du transpondeur radiofréquences s'en trouve grandement facilitée sans avoir besoin de précautions supplémentaires. Ce transpondeur radiofréquence passif peut être en particulier un transpondeur à identification, nommé tag RFID.

Dans un mode de réalisation particulier, le premier diamètre intérieur de l'antenne rayonnante est constant ou continument variable bien que des solutions de type variable par morceaux peuvent aussi être envisagées avec des variations de faible amplitude de diamètre intérieur d'un morceau au morceau contigu.

Cela permet de s'assurer de l'absence de point singulier d'un point de vue mécanique au niveau de la première zone de l'antenne rayonnante qui impacterait l'intégrité physique de l'antenne rayonnante.

De préférence, l'antenne primaire de la partie électronique étant connectée aux bornes d'une carte électronique comprenant la puce électronique, l'impédance électrique de l'antenne primaire est adaptée à l'impédance électrique de la carte électronique du transpondeur radiofréquence.

On entend par le terme impédance électrique de la carte électronique, l'impédance électrique aux bornes de l'antenne primaire ce qui représente, l'impédance électrique de la carte électronique comprenant au moins une puce électronique et un circuit imprimé sur lequel la puce électronique est connectée.

En réalisant l'adaptation d'impédance de l'antenne primaire à celle de la carte électronique, on optimise le transpondeur radiofréquence à la fréquence de communication en améliorant le gain et en ayant un facteur de forme plus sélectif, une bande passante plus étroite, de la carte électronique. Ainsi les performances de communication du transpondeur radiofréquence sont améliorées pour une même quantité d'énergie transmise au transpondeur radiofréquence. Cela se traduit en particulier par une augmentation de la distance de lecture du transpondeur radiofréquence. L'adaptation d'impédance de l'antenne primaire est obtenue par l'ajustement d'au moins l'une des caractéristiques géométriques de l'antenne primaire comme par exemple, le diamètre du fil, le matériau de ce fil et la longueur du fil.

L'adaptation d'impédance de l'antenne primaire peut être aussi obtenue par l'ajout d'un circuit de transformation d'impédance constitué de composants électroniques additionnels entre l'antenne primaire et le circuit électronique comme par exemple, des filtres à base d'inductance et de capacités et des lignes de transmission.

L'adaptation d'impédance de l'antenne primaire peut aussi être obtenue par la combinaison des caractéristiques de l'antenne primaire et des caractéristiques d'un circuit de transformation d'impédance.

Selon un mode de réalisation particulier, la puce électronique et au moins une partie de l'antenne primaire sont noyées dans un matériau rigide et isolant électriquement tel que, par exemple, de la résine de type époxy haute température. L'ensemble constitue la partie électronique du transpondeur radiofréquence.

Ainsi, on rigidifie la partie électronique comprenant au moins une partie de l'antenne primaire et la puce électronique connectée au circuit imprimé rendant plus fiable les connexions mécaniques entre ses composants vis-à-vis des sollicitations thermo mécaniques de l'objet à identifier.

Cela permet aussi l'industrialisation de la partie électronique du transpondeur radiofréquence indépendamment de l'antenne rayonnante ou de l'objet à identifier. Notamment une miniaturisation du composant électronique comprenant l'antenne primaire et la puce électronique peut être envisagée en utilisant par exemple une micro bobine à spires comme antenne primaire.

Selon un autre mode de réalisation, la partie de l'antenne primaire non noyée dans la masse rigide est revêtue d'un matériau isolant électriquement.

Ainsi, si l'antenne primaire n'est pas entièrement contenue dans la masse rigide et isolante électriquement de la partie électronique, il est utile de l'isoler par l'intermédiaire d'un revêtement dans un matériau isolant électriquement comme ceux employés pour une gaine d'isolation de câble électrique.

Avantageusement, le rapport entre le pas d'hélice et le diamètre d'enroulement pour au moins une boucle du ressort hélicoïdal située dans la première zone de l'antenne rayonnante est supérieure à 0,8.

En effet, en dehors de la zone de l'antenne rayonnante qui est située au droit de la partie électronique et donc de l'antenne primaire, un rapport du pas d'hélice sur le diamètre d'enroulement supérieur à 0,8 pour une boucle de l'antenne rayonnante a pour effet d'étirer le ressort hélicoïdal. Ainsi on diminue la longueur utile de fil pour parcourir une distance élémentaire de l'antenne rayonnante. De ce fait on diminue la résistance de l'antenne rayonnante. Par conséquence, à iso champ électrique, l'intensité du courant électrique circulant dans l'antenne rayonnante est plus importante à la fréquence propre de l'antenne rayonnante ce qui permet d'améliorer la performance de communication du transpondeur radiofréquence. De plus, l'étirement du ressort hélicoïdal permet d'améliorer le rendement de l'antenne rayonnante en améliorant le rapport entre la résistance de rayonnement sur la résistance de pertes. Cet étirement permettra ainsi de maximiser le champ électrique rayonné par l'antenne rayonnante à iso courant électrique circulant dans l'antenne rayonnante. Enfin, l'étirement de l'antenne rayonnante permet de diminuer le volume occupé par le ressort hélicoïdal à iso pas d'hélice de l'antenne rayonnante. Ainsi, dans un environnement dimensionnel contraint comme l'épaisseur d'une enveloppe pneumatique, il est possible d'augmenter l'épaisseur de gomme isolante entourant l'antenne rayonnante dans sa première zone. Cette isolation électrique minimise les pertes et améliore donc la performance de communication du transpondeur radiofréquence aussi bien en émission qu'en réception. Bien entendu, il est idéal que chacune des boucles du ressort hélicoïdal de la première zone de l'antenne rayonnante soit allongée ce qui améliore d'autant la performance de communication du transpondeur radiofréquence.

De préférence, le rapport entre le pas d'hélice et le diamètre d'enroulement de chacune des boucles du ressort dans la première zone de l'antenne rayonnante est inférieure à 3, préférentiellement inférieure à 2

Bien qu'il soit intéressant d'améliorer la performance radioélectrique de l'antenne rayonnante, il ne faut pas non plus négliger les autres fonctions qu'elle doit remplir. En particulier, le ressort hélicoïdal est une structure souple adaptée pour supporter des sollicitations tridimensionnelles auxquelles le transpondeur radiofréquence devra faire face dans son application pneumatique. De ce fait, il convient de limiter l'étirement de l'antenne rayonnante dans cette première zone afin de conserver une souplesse suffisante à l'antenne rayonnante dans son ensemble et de ce fait de s'assurer de l'intégrité physique du transpondeur radiofréquence.

Selon un mode de réalisation particulier, les deux dernières boucles du ressort hélicoïdal dans la première zone de l'antenne rayonnante situées axialement, le plus extérieurement par rapport à la partie électronique sont jointives sur au moins un tour.

Ceci évite alors un entrelacement au niveau des antennes rayonnantes des transpondeurs radiofréquences lors de la manipulation de ceux-ci. Ainsi, la manutention des transpondeurs radiofréquences est facilitée permettant d'optimiser le coût de revient des transpondeurs radiofréquences. Le fait de limiter cet effet aux boucles situées la plus axialement extérieurement par rapport à la partie électronique n'affecte que faiblement la performance radioélectrique de l'antenne rayonnante.

Selon un mode de réalisation privilégié, pour la deuxième zone de l'antenne rayonnante où l'antenne rayonnante est située au droit de la partie électronique, le rapport entre le pas d'hélice et le diamètre d'enroulement pour chaque boucle du ressort hélicoïdal est inférieur ou égal à 0,8

En effet, dans cette deuxième zone de l'antenne rayonnante et tout particulièrement dans la zone se situant au droit de l'antenne primaire, la performance attendue de l'antenne rayonnante est le couplage électromagnétique avec l'antenne primaire de la partie électronique. En particulier le couplage est principalement inductif si cette antenne primaire est une bobine à spires. De ce fait, un premier levier pour améliorer ce couplage est d'augmenter l'inductance de l'antenne rayonnante dans cette deuxième zone. ce qui revient à contracter le ressort hélicoïdal. De plus, le fait de contracter l'antenne rayonnante dans cette deuxième zone favorise aussi le transfert d'énergie entre l'antenne primaire et l'antenne rayonnante par l'augmentation de la surface d'échange proposée par l'antenne rayonnante à iso longueur de l'antenne primaire située en vis-à-vis de l'antenne rayonnante. Cette amélioration du transfert d'énergie entraine une meilleure performance de communication du transpondeur radiofréquence.

Selon un mode de réalisation spécifique, la communication radioélectrique avec le lecteur à émission radiofréquence s'effectue dans la bande des UHF et tout spécifiquement dans la gamme comprise entre 860 et 960Mhz.

En effet, dans cette bande de fréquence, la longueur de l'antenne rayonnante est inversement proportionnelle à la fréquence de communication. Et au-delà de ces bandes de fréquences, la communication radioélectriques est fortement perturbée voire impossible dans les matériaux élastomères. De ce fait, cela constitue le meilleur compromis entre la taille du transpondeur radiofréquence et sa communication radioélectrique notamment en champ lointain permettant d'avoir des distances de communication satisfaisantes pour l'industrie du pneumatique.

Selon un autre mode de réalisation particulier, la longueur L0 de l'antenne rayonnante est comprise entre 30 et 50 millimètres.

En effet, dans la gamme de fréquence entre 860 et 960 MHz et selon les permittivités diélectriques relatives des mélanges élastomères entourant le transpondeur radiofréquence, la demi-longueur d'onde des ondes radioélectriques émises ou reçues par le transpondeur radiofréquence est située dans la fourchette entre 30 et 50 millimètre, idéalement entre 35 et 45 millimètres pour des matériaux classiques employés pour la conception de pneumatique. Afin d'optimiser le fonctionnement de l'antenne rayonnante à ces longueurs d'ondes, il convient de parfaitement adapter la longueur de l'antenne rayonnante à cette demi longueur d'onde.

Avantageusement, le diamètre d'enroulement du ressort hélicoïdal dans la première zone de l'antenne rayonnante est compris entre 0,6 et 2,0 millimètres, de préférence entre 0,6 et 1,6 millimètre.

Cela permet de limiter le volume occupé par l'antenne rayonnante est donc d'augmenter l'épaisseur de mélange élastomère isolant électriquement autour du transpondeur radiofréquence. Bien entendu ce diamètre du ressort hélicoïdal dans la première zone de l'antenne rayonnante peut être constant, variable, continument variable ou variable par morceaux. Il est préférable d'un point de vue de l'intégrité mécanique de l'antenne rayonnante que le diamètre soit constant ou continument variable.

Selon un mode de réalisation privilégié, le pas d'hélice d'au moins une boucle de l'antenne rayonnante dans la première zone de l'antenne rayonnante est compris entre 1 et 4 millimètres, de préférence entre 1,5 et 2 millimètres.

Cela permet d'une part d'assurer que le rapport du pas d'hélice sur le diamètre d'enroulement du ressort, ou au moins une boucle, dans la première zone de l'antenne rayonnante est inférieur à 3 garantissant un minimum d'élongation du ressort hélicoïdal. De plus, ce pas peut aussi être constant ou variable sur toute la première zone de l'antenne rayonnante. Bien entendu, il est préférable que le pas soit continument variable ou avec des transitions de faible variation pour éviter des points singuliers dans l'antenne rayonnante qui représenteraient des faiblesses mécaniques pour la structure.

Selon un mode de réalisation avantageux, le diamètre du fil de l'antenne rayonnante est comprise entre 0,05 et 0, 25 millimètres, idéalement entre 0, 12 et 0, 22 millimètres.

Dans cette gamme de fil, on assure d'une part que la résistance des pertes sera faible améliorant ainsi les performances radioélectriques de l'antenne rayonnante. De plus, limiter le diamètre du fil permet d'éloigner l'antenne rayonnante des conducteurs électriques en augmentant l'épaisseur des mélanges élastomères isolants électriquement. Cependant, il est nécessaire de conserver une certaine résistance au fil pour supporter les contraintes thermomécaniques qu'il subira dans un environnement fortement sollicitant comme l'enveloppe pneumatique sans optimiser la limite à rupture du matériau de ces fils, généralement en acier doux. Cela permet d'assurer un compromis technico économique satisfaisant de l'antenne rayonnante.

L'invention a aussi pour objet un patch d'identification constitué d'un transpondeur radiofréquence noyé dans une masse souple et isolante électriquement de mélanges élastomères.

On entend ici par le terme isolant électriquement que la conductivité électrique du mélange élastomère est en deçà du seuil de percolation des charges conductrices du mélange.

Ainsi, on constitue un patch d'identification qui facilite la mise en place du transpondeur radiofréquence dans des objets à identifier comprenant des parties en matériau de base élastomère. Une couche de gomme de liaison usuelle pourra être employée si nécessaire, pour solidariser le patch d'identification à l'objet à identifier tel un pneumatique.

De plus, les caractéristiques de rigidité et de conductivité électrique du mélange élastomère assurent une insertion mécanique et une isolation électrique de qualité du transpondeur radiofréquence au sein des composants de l'objet à identifier. Ainsi le fonctionnement du transpondeur radiofréquence n'est pas perturbé par l'objet à identifier.

L'invention a aussi pour objet, un procédé de fabrication du transpondeur radiofréquence qui comporte les étapes suivantes :
- on connecte électriquement une puce électronique sur un circuit imprimé afin de constituer une carte électronique ;
- on réalise à l'aide d'un fil conducteur une bobine constituant une antenne primaire ;
- on connecte électriquement l'antenne primaire à la carte électronique ;
- on noie au moins une partie de l'antenne primaire et la carte électronique dans une masse rigide et isolante électriquement telle une résine thermodurcissable afin de constituer la partie électronique du transpondeur radiofréquence ;
- on réalise une première partie d'une antenne rayonnante de longueur L0 et d'axe de révolution U constituée d'un ressort hélicoïdal, selon un mode de réalisation spécifique en commençant par la boucle située la plus extérieurement par rapport au plan médian de l'antenne rayonnante, comprenant la première moitié de la première zone de l'antenne rayonnante et au moins une première partie de la seconde zone de l'antenne rayonnante ;
- on positionne axialement et radialement la partie électronique du transpondeur radiofréquence par rapport à la première partie de l'antenne rayonnante, selon un mode de réalisation spécifique la partie électronique est mise en appui sur la boucle de la première zone de l'antenne rayonnante située la plus intérieurement par rapport au plan médian de l'antenne rayonnante, de telle façon que l'antenne primaire de la partie électronique étant circonscrite dans un cylindre présentant un axe et un plan médian qui lui est perpendiculaire, l'axe de l'antenne primaire et l'axe de révolution U de l'antenne rayonnante sont sensiblement parallèles et le plan médian de l'antenne primaire est sensiblement centrée par rapport au milieu de la longueur L0 de l'antenne rayonnante. ;
- On finalise la seconde partie de l'antenne rayonnante, avantageusement en commençant par la deuxième partie de la deuxième zone de l'antenne rayonnante, comprenant au moins la seconde moitié de la première zone de l'antenne rayonnante.

Ainsi, la fabrication du transpondeur radiofréquence est simplifiée en réalisant séparément la partie électronique et l'antenne rayonnante du transpondeur radiofréquence. De plus, l'étape d'assemblage des deux composants ne nécessite aucune connexion mécanique ou électrique entre les deux composants ce qui réduit drastiquement les coûts de fabrication du transpondeur radiofréquence.

L'étape de réalisation de l'antenne rayonnante est effectuée en deux phases. Entre les deux phases la partie électronique préalablement réalisée, est positionnée par rapport à la première partie de l'antenne rayonnante réalisée. Ensuite, la deuxième partie de l'antenne est réalisée en présence de la partie électronique. Ce procédé est facilement automatisable.

L'invention porte aussi sur un autre procédé de fabrication du transpondeur radiofréquence qui comporte les étapes suivantes :
- on connecte électriquement une puce électronique sur un circuit imprimé afin de constituer une carte électronique ;
- on réalise à l'aide d'un fil conducteur une bobine constituant une antenne primaire ;
- on connecte électriquement l'antenne primaire à la carte électronique ;
- on noie au moins une partie de l'antenne primaire et la carte électronique dans une masse rigide et isolante électriquement telle une résine thermodurcissable afin de constituer la partie électronique du transpondeur radio fréquence ;
- on réalise une antenne rayonnante de longueur L0 et d'axe de révolution U constituée d'un ressort hélicoïdal comprenant une deuxième zone, définie par un pas d'hélice P2 et un diamètre d'enroulement D2, comprise entre deux parties d'une première zone de l'antenne rayonnante, définie par un pas d'hélice P1 et un diamètre d'enroulement D1;
- on identifie une zone de transition, comprenant au moins une spire du ressort hélicoïdal, entre une partie de la première zone et la deuxième zone de l'antenne rayonnante à l'aide de moyens de détection, par exemple des moyens optiques ou des capteurs de distance de type mécanique ou magnétique, de la variation du diamètre d'enroulement et/ou de la variation du pas d'hélice ;
- on identifie un point de pliage situé sur la spire de la zone de transition; préférentiellement situé sur la moitié de la spire se situant la plus proche de la deuxième zone de l'antenne rayonnante ;
- on effectue un pliage du ressort hélicoïdal d'un premier angle, préférentiellement compris entre 70 à 110°, autour d'un axe perpendiculaire à l'axe de révolution U passant par le point de pliage entre les parties du ressort hélicoïdal situées en amont et en aval du point de pliage afin de constituer une ouverture dans la partie amont du ressort hélicoïdal, comprenant le deuxième zone de l'antenne rayonnante, dont le diamètre inscrit est supérieur ou égal au diamètre du cylindre circonscrit à la partie électronique ;
- On introduit la partie électronique dans la partie amont du ressort du ressort hélicoïdal par l'intermédiaire de l'ouverture de sorte que l'extrémité axiale du cylindre circonscrit à la partie électronique située le plus extérieurement par rapport à la partie amont du ressort hélicoïdal soit située à une distance inférieure au pas d'hélice P2 au-dessus d'un plan dont la normale est l'axe de révolution de la partie amont passant par le point de pliage;
- On plie de nouveau le ressort hélicoïdal au niveau du point de pliage d'un second angle opposé au premier angle autour de l'axe perpendiculaire à l'axe de révolution de la partie amont du ressort hélicoïdal passant par le point de pliage dont l'amplitude est au moins égale ou supérieure à l'amplitude du premier angle de sorte que les axes de révolution des parties amont et avale du ressort hélicoïdal soient colinéaires.

Ce second mode de réalisation permet de dissocier l'étape de réalisation du ressort hélicoïdal formant l'antenne rayonnante de l'étape d'assemblage de la partie électronique au sein de l'antenne rayonnante ce qui permet d'optimiser les rendements industriels de fabrication du ressort hélicoïdal. L'assemblage peut ainsi être réalisé sur un poste dédié.

Selon la nature du métal constituant le ressort hélicoïdal et de ses propriétés élasto-plastiques, il conviendra de choisir le second angle de pliage afin que les deux parties situées en amont et en aval du point de pliage soient colinéaires après le second pliage du ressort hélicoïdal afin de reconstituer le ressort hélicoïdal d'axe de révolution U. L'alignement des deux axes de révolution des parties amont et avale est effectuée dans les limites de tolérance admissibles pour que le fonctionnement radiofréquence de l'antenne rayonnante ne soit pas perturbée, ce qui correspondant à un angle entre les axes de révolution des parties amont et avale du ressort hélicoïdal inférieure à 20°.

La potentielle plastification localisée du ressort hélicoïdal à proximité du point de pliage ne perturbe pas le comportement mécanique du ressort hélicoïdal qui par nature travaille en grand déplacement. Cette zone ne doit pas en principe travailler dans le domaine de plasticité du matériau du ressort hélicoïdal.

La localisation du point de pliage au niveau de la zone de transition, à proximité de la deuxième zone de l'antenne rayonnante, permet d'assurer un centrage et une coaxialité de la partie électronique par rapport à la deuxième zone du ressort hélicoïdal ce qui est favorable au bon fonctionnement électromagnétique entre les antennes primaire et rayonnante.

De plus, quel que soit le procédé de fabrication, , sur un poste industriel à enrouler les ressorts, il est facile de modifier à la fois le pas d'hélice et le diamètre d'enroulement du ressort hélicoïdal à chaque boucle à l'aide d'un même fil pour des fils d'acier compris entre 0,05 et 0,25 millimètres de diamètre revêtu ou non. Cela permet, en particulier, de réaliser au besoin des spires jointives.

Selon un mode de réalisation particulier l'un quelconque des procédés de fabrication selon l'invention comprend aussi une étape de revêtir la partie d'antenne primaire non noyée dans la masse rigide et isolante électriquement d'un matériau isolant électriquement.

Cette caractéristique est utile pour obtenir un couplage électromagnétique de qualité entre l'antenne rayonnante et l'antenne primaire en empêchant tout contact physique entre les parties conductrices des deux antennes.

De préférence, l'un quelconque des procédés de fabrication selon l'invention comprend une étape pour ajouter d'un circuit électronique additionnel comprenant des éléments inductifs et/ou capacitifs sur la carte électronique, idéalement un circuit galvanique en forme de méandre afin d'adapter l'impédance électrique de l'antenne primaire à l'impédance électrique de la carte électronique.

Cela permet d'améliorer l'efficacité de l'antenne primaire au cas où la réalisation de l'antenne primaire permet seulement de s'approcher de l'impédance électrique de la carte électronique sans que cela soit parfait,.

L'invention a aussi pour objet un procédé de fabrication du patch d'identification dans lequel un transpondeur radiofréquence est incorporé dans une masse d'au moins un mélange élastomère souple et isolant électriquement par un procédé d'injection, de compression ou d'extrusion.

Ainsi, quel que soit l'état de l'élastomère, cru ou réticulé, il est facile d'incorporer le patch d'identification à un objet à identifier, tel un pneumatique, comprenant des produits élastomères en employant si nécessaire des techniques classiques d'adhésion élastomère/élastomère. Cette incorporation peut avoir lieu soit lors de la phase de fabrication de l'objet, comme par exemple au sein d'une ébauche crue d'un pneumatique, et en particulier avant la réticulation ou la vulcanisation des élastomères soit lors d'une étape postérieure au procédé de fabrication de l'objet à identifier comme par exemple directement sur les faces interne ou externe du pneumatique.

### Description brève des dessins

L'invention sera mieux comprise à la lecture de la description qui va suivre dans le cas d'une application à des bandages pneumatiques. Cette application est donnée uniquement à titre d'exemple et faite en se référant aux figures annexées dans lesquelles les mêmes numéros de référence désignent partout des parties identiques et dans lesquelles :
- La figure 1 présente une vue en perspective d'un transpondeur radiofréquence de l'état de la technique dans une configuration où la partie électronique est située à l'intérieur de l'antenne rayonnante ;
- La figure 2 présente une vue en perspective d'un transpondeur radiofréquence selon l'invention;
- La figure 3 est un autre exemple de transpondeur radiofréquence selon l'invention présentant un rapport pas d'hélice sur diamètre d'enroulement supérieur à 0,8 ;
- La figure 4 est un dernier exemple de transpondeur radiofréquence selon l'invention présentant à un certain nombre de spécificités ;
- La figure 5 est une vue éclatée d'un patch d'identification ;
- La figure 6 présente un graphe de la puissance électrique transmise à trois transpondeurs radiofréquences selon la bande de fréquence d'observation, et
- La figure 7 est un synoptique d'un procédé de fabrication d'un patch d'identification comprenant un transpondeur radiofréquence selon l'invention.

### Description détaillée de modes de réalisation

Dans ce qui suit, les termes « pneumatique » et « bandage pneumatique » sont employés de façon équivalente et concernent tout type de bandage pneumatique ou non pneumatique (en anglais « tire », « pneumatic tire », « non-pneumatic tire »)

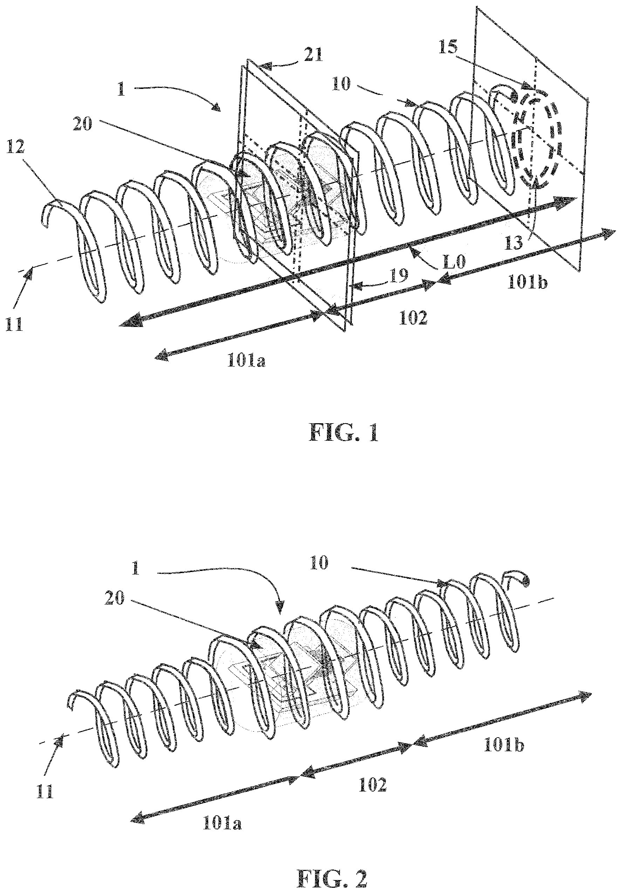

La figure 1 présente un transpondeur radiofréquence passif 1 de l'état de la technique dans une configuration où la partie électronique 20 est située à l'intérieur de l'antenne rayonnante 10. L'antenne rayonnante 10 est constituée d'un fil en acier 12 qui a été déformé plastiquement afin de former un ressort hélicoïdal présentant un axe de révolution 11. Le ressort hélicoïdal est défini tout d'abord par un diamètre d'enroulement du fil revêtu et un pas d'hélice. Ces deux paramètres géométriques du ressort hélicoïdal sont ici constants. Ainsi, on détermine précisément des diamètres intérieurs 13 et extérieur 15 du ressort hélicoïdal en prenant en compte le diamètre du fil. La longueur du ressort L0 correspond ici à la demi-longueur d'onde du signal de transmission du transpondeur radiofréquence 1 dans une masse de mélange élastomère. Ainsi on peut définir un plan médian 19 au ressort hélicoïdal perpendiculaire à l'axe de révolution 11 séparant l'antenne rayonnante 10 en deux parties égales. La forme géométrique de la partie électronique 20 est circonscrite dans un cylindre dont le diamètre est inférieur ou égal au diamètre intérieur 13 du ressort hélicoïdal. L'enfilement de la partie électronique 20 dans l'antenne rayonnante 10 s'en trouve facilité. Le plan médian 21 de l'antenne primaire se trouve sensiblement superposé au plan médian 19 de l'antenne rayonnante 10. Enfin l'axe de l'antenne primaire est sensiblement parallèle à l'axe de révolution 11 de l'antenne rayonnante 10. On peut diviser l'antenne rayonnante en deux zones distinctes. La première zone 101 de l'antenne rayonnante 10 où le ressort hélicoïdal n'est pas situé au droit de la partie électronique 20. Cette première zone 101 de l'antenne rayonnante 10 comprend deux parties 101a et 101b sensiblement équivalentes encadrant axialement la seconde zone 102 de l'antenne rayonnante 10.

La figure 2 est un transpondeur radiofréquence 1 selon l'invention qui a comme caractéristique distinctive par rapport au transpondeur radio fréquence de l'état de la technique que le diamètre intérieur de la première zone 101 de l'antenne rayonnante 10 est inférieur au diamètre intérieur de la deuxième zone 102 de l'antenne rayonnante 10. De surcroît, le diamètre du cylindre circonscrit à la partie électronique ayant un axe de révolution parallèle, voire coaxial, à l'axe de révolution 11 de l'antenne rayonnante 10 présente un diamètre supérieur au premier diamètre intérieur de l'antenne rayonnante 10. Dans notre cas, afin de ne pas modifier la forme générale du ressort hélicoïdal, le pas d'hélice de la première zone 101 de l'antenne rayonnante 10 a été adaptée à la diminution du diamètre d'enroulement du ressort hélicoïdal afin que le rapport entre le pas d'hélice sur le diamètre d'enroulement soit constant. Ceci est obtenu par une diminution d'environ 20 pourcent du pas d'hélice et du diamètre d'enroulement du ressort hélicoïdal de la figure 1.

Dans notre cas, ni le pas d'hélice, ni le diamètre d'enroulement de l'antenne rayonnante 10 dans la deuxième zone 102 de l'antenne rayonnante 10 n'a pas été modifié par rapport à l'antenne rayonnante de la figure 1. De ce fait, le rapport entre le pas d'hélice et le diamètre d'enroulement de l'antenne rayonnante10 aussi bien pour la première zone que la deuxième zone est inférieure à 0,8. Nécessairement, le distance curviligne du fil d'acier formant l'antenne rayonnante 10 dans la première zone 101 de l'antenne rayonnante 10 est restée constante ce qui ne modifie pas la résistance de perte de l'antenne rayonnante 10. Enfin, l'efficacité de rayonnement de l'antenne rayonnante 10 n'est que très faiblement modifiée par ce changement géométrique du ressort hélicoïdal dans la première zone 101 de l'antenne rayonnante 10.

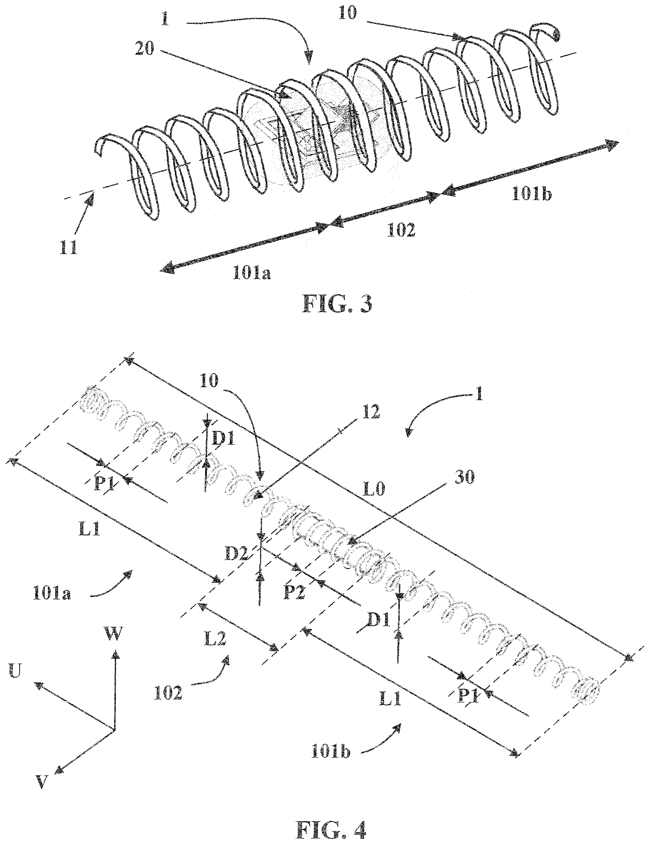

La figure 3 est un autre exemple de transpondeur radiofréquence 1 selon l'invention qui a comme caractéristique distinctive par rapport au transpondeur radiofréquence de l'état de la technique que, tout d'abord, le diamètre intérieur de la première zone 101 de l'antenne rayonnante 10 est plus petit que le diamètre intérieur de la deuxième zone 102 de l'antenne rayonnante 10 et que le diamètre du cylindre circonscrit à la partir électronique 20 enrobée dans une masse rigide est isolante électriquement. De plus, le pas d'hélice du ressort hélicoïdal a été conservé sur toute l'antenne rayonnante 10. De ce fait, le rapport pas d'hélice sur diamètre d'enroulement dans la première zone 101 de l'antenne rayonnante a été augmentée de 25 pourcents par rapport à celui du transpondeur de l'état de la technique par la diminution de 20 pourcents du diamètre d'enroulement du fil. De ce fait, le rapport pas d'hélice sur diamètre d'enroulement dans la première zone 101 de l'antenne rayonnante 10 est supérieur à 0,8. La conséquence de cette modification du rapport entre le pas d'hélice sur le diamètre d'enroulement, la longueur curviligne du fil d'acier formant le ressort hélicoïdal se trouve diminué de 20 pourcents dans la première zone 101 de l'antenne rayonnante par rapport à l'antenne rayonnante 10 de l'état de la technique de la figure 1. Automatiquement, la résistance électrique de l'antenne rayonnante 10 pour cette première zone 101 s'en trouve diminuée. De ce fait, l'intensité du courant électrique généré par l'exposition de l'antenne rayonnante 10 au champ électrique délivré par le lecteur à émission radiofréquence est plus élevée ce qui améliore considérablement la performance de communication du transpondeur radiofréquence 1. Enfin, l'efficacité de l'antenne rayonnante 10 pour cette première zone 101 se trouve forcément améliorée par la diminution de cette résistance de perte. Ceci améliore donc aussi l'émission radioélectrique de l'antenne rayonnante 10.

La figure 4 est une illustration d'un transpondeur radiofréquence 1 selon l'invention fonctionnant dans la gamme de fréquence entre 860 et 960 Mhz destinée à être incorporée dans une enveloppe pneumatique par l'intermédiaire d'un patch d'identification en matériaux élastomère. Pour faciliter la performance de radiocommunication et l'intégrité physique du transpondeur radiofréquence 1 au sein de l'enveloppe pneumatique, il sera préférable de disposer l'axe de révolution de l'antenne rayonnante 10, parallèle à la direction U dans une direction perpendiculaire aux fils de la nappe carcasse de l'enveloppe pneumatique à structure radiale, en particulier si ceux-ci sont métalliques.

Le transpondeur radiofréquence 1 présente ici une antenne rayonnante 10 et une partie électronique située à l'intérieur de l'antenne rayonnante 10. La partie électronique comprend une puce électronique connectée à un circuit imprimé. Une antenne primaire constituée d'un fil conducteur comprenant dix-sept spires rectangulaires connectées au circuit imprimé. La face opposée du circuit imprimé à l'antenne primaire comprend un circuit galvanique en forme de méandre constituant une ligne de 10 millimètres de long et de 1 millimètre de large. Enfin, le diamètre du cylindre circonscrit de l'antenne primaire est de 0,8 millimètres. Aussi bien le nombre de spires complètes de l'antenne primaire que le circuit galvanique sur la face opposée du circuit imprimé permet d'adapter l'impédance de l'antenne primaire à celle de la carte électronique.

La carte électronique ainsi constituée est noyée dans une masse 30 en résine époxy assurant la fiabilité mécanique des composants électroniques et l'isolation électrique de la carte électronique. Le cylindre circonscrit à la masse rigide 30 a un diamètre de 1,15 millimètres et une longueur de 6 millimètres.

La longueur L0 de l'antenne rayonnante 10 est ici de 45 millimètres et correspond à la demi-longueur d'onde des ondes radioélectriques à la fréquence de 915 MHz dans un milieu de permittivité diélectrique relatif environ égale à 5. L'antenne rayonnante 10 est réalisée à l'aide d'un fil d'acier 12 de diamètre 0,225 millimètre revêtu en surface d'une couche de laiton.

L'antenne rayonnante 10 se décompose en deux zones principales. La première zone 101 correspond à la section de l'antenne rayonnante ne se situant pas au droit de la partie électronique. Elle comprend deux sous zones 101a et 101b entourant de part et d'autre la masse 30 rigide et isolante électriquement.

Chaque sous zone 101a 101b d'une longueur L1 de 19 millimètres comprend 12 spires circulaires d'un diamètre d'enroulement D1 constant de 1,275 millimètres. Cela détermine des diamètres intérieur et extérieur de respectivement 1,05 et 1,5 millimètres. Le pas d'hélice P1 des spires circulaires est de 1,55 millimètres. Ainsi, le rapport du pas d'hélice P1 sur le diamètre d'enroulement D1 des spires est de 1,21. Les extrémités axialement extérieures de chaque sous zone 101a et 101b se terminent par 2 spires jointives. De ce fait, le rapport élevé assure de maximiser l'efficacité des propriétés radioélectriques de l'antenne rayonnante 10 dans cette zone 101. De plus, le contact entre les spires situées le plus extérieurement à l'antenne rayonnante 10 empêche l'entrelacement des ressorts hélicoïdaux entre eux lors de la manipulation des transpondeurs radiofréquences. Comme la majorité des spires de la première zone 101 de l'antenne rayonnante 10 présente un rapport supérieur à 0,8, la performance radioélectrique du transpondeur radiofréquence 1 s'en trouve nettement améliorée.

Sur la seconde zone 102 de l'antenne rayonnante 10 correspondante à la section de l'antenne rayonnante 10 se situant au droit de la partie électronique, l'antenne rayonnante 10 présente une longueur de 7 millimètres. Le ressort hélicoïdal présente un pas d'hélice P2 constant de 1 millimètre et un diamètre d'enroulement D2 constant de 1,575 millimètres. Ainsi, le diamètre intérieur du ressort hélicoïdal de la deuxième zone de l'antenne rayonnante est de 1,35 millimètres Cela permet d'avoir un rapport du pas sur le diamètre d'enroulement constant de l'ordre de 0,63 Ce rapport permet de maximiser l'inductance de la deuxième zone 102 de l'antenne rayonnante 10 par rapport à la première zone 101 ce qui permet une meilleure efficacité de couplage électromagnétique avec la partie électronique.

Dans ce cas particulier, le diamètre intérieur de l'antenne rayonnante 10, égal à 1,05, de la première zone 101 est inférieur au diamètre de la masse 30, représentant le cylindre circonscrit de la partie électronique, égal à 1,15 millimètres. De ce fait, les sous zones 101a et 101b de la première zone 101 de l'antenne rayonnante 10 représentent des butées mécaniques au mouvement axial de la masse 30 à l'intérieur de l'antenne rayonnante 10. La mise en place de la partie électronique 20 sera réalisée, dans un premier mode de réalisation par enfilement de la masse 30 rigide et isolante dans l'antenne rayonnante 10.

Cette mise en place est possible par exemple en ayant au préalable plié élastiquement l'une des sous zones 101a ou 101b de la première zone 101 de l'antenne rayonnante 10 d'un angle de 45 degrés par rapport à l'axe de révolution de l'antenne rayonnante 10. Ce pli est réalisé au droit de la zone de transition entre la première zone 101 et la deuxième zone 102 de l'antenne rayonnante 10. Ainsi, l'ouverture créée par ce pliement est suffisante pour introduire la masse 30 à l'intérieur de la deuxième zone 102 de l'antenne rayonnante 10. Il suffit de relâcher la première zone 101a de l'antenne rayonnante après cette introduction pour obtenir le transpondeur radiofréquence de la figure 4.

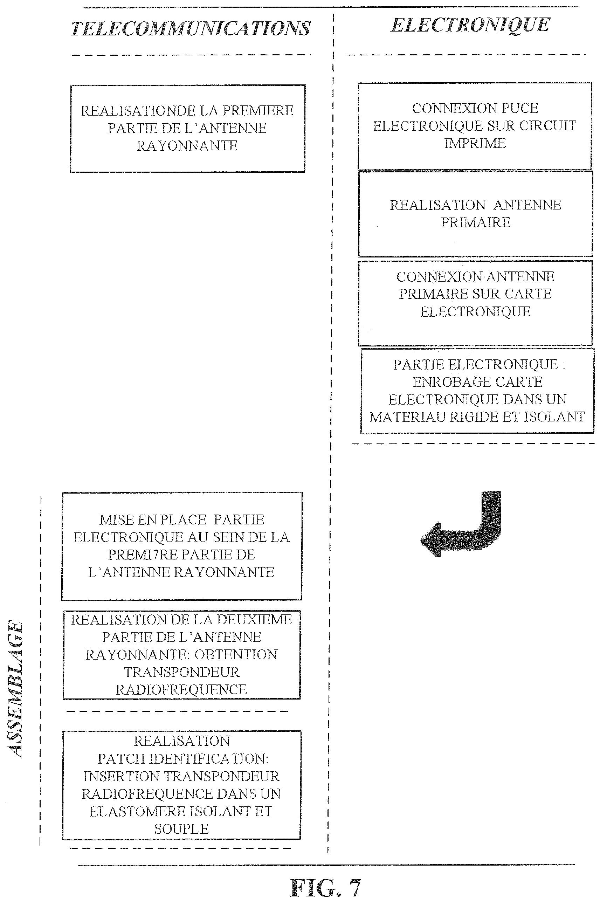

Un second mode de mise en place de la partie électronique enrobé dans sa masse 30 isolante électriquement à l'intérieure de l'antenne rayonnante 10 est illustré à l'aide du synoptique présenté en figure 7.

De plus, le diamètre du cylindre circonscrit à l'antenne primaire est bien supérieur au tiers du diamètre intérieur du ressort hélicoïdal de la deuxième zone 102 de l'antenne rayonnante. Bien que le cylindre circonscrit à l'antenne primaire ne soit pas coaxial à l'axe de révolution de l'antenne rayonnante 10, il lui est sensiblement parallèle. Et, la distance minimale entre la deuxième zone 102 de l'antenne rayonnante 10 et l'antenne primaire est inférieure à 0,3 millimètres, bien inférieur au quart du diamètre intérieur de l'antenne rayonnante 10. Cette proximité des antennes est autorisée par le pas P2 resserré appliqué à la deuxième zone 102 de l'antenne rayonnante 10 permettant d'obtenir une tolérance plus petite des dimensions du ressort en particulier le diamètre d'enroulement D2. De plus cette proximité assure un couplage électromagnétique entre les deux antennes de meilleure qualité. Bien entendu, ce couplage électromagnétique aurait pu être amélioré en utilisant des spires de forme identique entre l'antenne primaire et l'antenne rayonnante, comme par exemple des spires circulaires. Ce couplage aurait été optimisée aussi en rendant coaxial les axes des deux antennes ce qui revient à placer la carte électronique à l'intérieur de l'antenne primaire pour minimiser la dimension axiale de la partie électronique. Ainsi, la qualité de la surface de transfert d'énergie électromagnétique entre les deux antennes aurait été optimale.

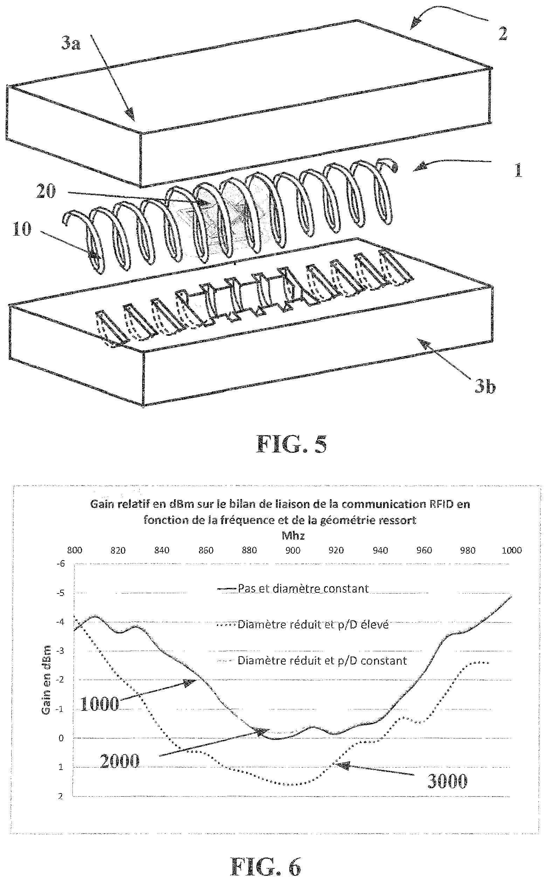

La figure 5 présente un patch d'identification 2 comprenant un transpondeur radiofréquence 1 selon l'invention noyé dans une masse souple 3 en matériau élastomère isolant électriquement représentée par les plaques 3a et 3b. Le transpondeur radiofréquence 1 est généralement placé au milieu du patch 2 afin de maximiser la plus petite distance entre la première zone de l'antenne rayonnante 10 et la surface externe du patch d'identification 2.

Dans le cas où le rapport entre le pas d'hélice et le diamètre d'enroulement de la boucle de la première zone de l'antenne rayonnante 10 est augmenté en réduisant le diamètre d'enroulement du fil d'acier, le volume occupé par le transpondeur radiofréquence 1 au sein de la masse 3 en matériaux élastomère est diminué.

Cela permet, dans une première application, de réduire l'épaisseur de chacune des plaques 3a et 3b du patch d'identification 2 en gardant la même distance entre la surface externe du patch d'identification 2 et la première zone 101 de l'antenne rayonnante 10. Cette réduction de l'épaisseur du patch d'identification 2 facilitera son introduction au sein d'un objet à identifier tout en conservation le même potentiel d'isolation électrique. Dans une seconde application, cela permet d'augmenter la distance entre la première zone 101 de l'antenne rayonnante 10 et la surface externe du patch d'identification 2. Cette seconde application permet d'améliorer la performance radioélectrique et donc la performance de communication du transpondeur radiofréquence 1 placé dans le patch d'identification 2. En effet, l'isolation électrique du patch 2 est proportionnelle à la distance entre la première zone 101 de l'antenne rayonnante 10 et la surface externe du patch 2. Le fonctionnement radioélectrique du transpondeur radiofréquence 1 est amélioré, ou égal si cette distance a atteint son asymptote d'efficacité, par une meilleure isolation électrique du patch d'identification 2.

La figure 6 est un graphe de la puissance électrique transmise par différents transpondeurs radiofréquences situés chacun à l'intérieur d'une enveloppe pneumatique de marque Michelin XINCITY de dimension 275/70 R22.5 à un lecteur radiofréquence externe. La fréquence de communication des transpondeurs radiofréquences est centrée sur 915 MHz. Le protocole de mesure employé correspond à la norme ISO/IEC 18046-3 intitulé « Identification Electromagnetic Field Threshold and Frequency Peaks ». Les mesures ont été effectuées pour un balayage en fréquence large et non ponctuellement comme habituellement. L'axe des abscisses représente la fréquence du signal de communication. L'axe des ordonnées est la puissance électrique reçue par le lecteur radiofréquence exprimée en décibel relativement à la puissance électrique maximale transmise par un transpondeur radiofréquence actuel de l'état de l'art. La courbe en continu 1000 représente la réponse d'un transpondeur radiofréquence selon le document cité. La courbe en tirets 2000 représente la réponse d'un transpondeur selon l'invention pour un même signal émis par le lecteur radiofréquence. En fait, ce second transpondeur correspond au transpondeur de la figure 2 pour lequel le rapport du pas d'hélice sur le diamètre d'enroulement du ressort hélicoïdal pour la première zone est resté identique au rapport pour un transpondeur radiofréquence de la figure 1. Enfin, la courbe en pointillés 3000 représente la réponse d'un transpondeur selon l'invention pour un même signal émis par le lecteur radiofréquence Ce troisième transpondeur a comme particularité que le rapport du pas d'hélice sur le diamètre d'enroulement du ressort hélicoïdal pour la première zone de l'antenne rayonnante a été augmentée pour être supérieur à 0,8 comme illustré dans la figure 3. On note un gain d'environ deux décibels en faveur de ce deuxième transpondeur radiofréquence selon l'invention par rapport au transpondeur radiofréquence de l'état de l'art sur la fréquence de communication du lecteur radiofréquence. Le gain minimal d'environ un décibel est observé sur une bande de fréquences élargie autour de la fréquence de communication. En revanche le premier transpondeur radiofréquence selon l'invention ne présente aucun gain vis-à-vis de sa performance de radiocommunication par rapport au transpondeur de l'état de l'art.

La figure 7 est un synoptique d'un procédé de fabrication d'un patch d'identification 2 selon l'invention. L'obtention du patch d'identification 2 nécessite la fabrication initiale d'un transpondeur radiofréquence 1 selon l'invention. Les diverses étapes chronologiques de la fabrication du transpondeur radiofréquence 1 puis celles du patch d'identification 2 sont identifiées. On délimite nettement les étapes liées aux métiers des télécommunications ou de l'électronique de celles de l'assemblage comme par exemple la mise en place sur enveloppe pneumatique qui peut être réalisé par le manufacturier de pneumatique.

En s'appuyant sur la figure 7 représentant un synoptique de fabrication d'un patch d'identification 2, on distingue trois phases indépendantes et successives.

Dans une première phase, on réalise la partie électronique 20 du transpondeur radiofréquence 1, qui assurera l'interrogation et la réponse de la puce électronique vers l'antenne rayonnante 10. La transmission d'information entre l'antenne rayonnante 10 et la partie électronique 20 est réalisée par couplage électromagnétique à l'aide d'une antenne primaire.

Ce dispositif électronique, encapsulé dans la masse rigide 30, est composé d'une part d'une puce électronique et d'autre part d'une antenne primaire.

La partie électronique 20 est destinée à se situer à l'intérieur de l'antenne rayonnante 10. Dans un premier mode de réalisation préférentiel, on emploie le procédé leadframe en matière de support électromécanique à l'antenne primaire et à la puce électronique représentant l'équivalent d'un circuit imprimé. Ce procédé est particulièrement bien adapté dans cette configuration en raison de sa facilité de miniaturisation.

La première étape consiste à composer la carte électronique. Pour cela on fixe, en premier lieu, sur la grille ou leadframe la puce électronique à l'aide d'une colle conductrice par exemple la H20E de la marque Tedella. Et le câblage de la puce est effectué par la technique de wire-bonding, c'est à-dire la réalisation d'un pont électrique par l'intermédiaire, par exemple, de fils en or de diamètre 20 micromètres entre la puce électronique et le circuit imprimé représenté par la grille. On peut alors mesurer l'impédance électrique de la carte électronique aux points de fixation de l'antenne primaire sur la grille à l'aide d'un appareil électrique adaptée comme un impédancemètre.

La deuxième étape consiste à réaliser l'antenne primaire. Dans un premier mode de réalisation, cette antenne sera constituée d'une bobine à spires circulaires construite directement sur la grille (lead frame) par la technologie du câblage de fil (wire-bonding). Une autre variante d'antenne primaire consiste à créer une antenne à l'aide de deux segments filaires de cuivre connectés à la carte électronique au moyen d'une technique de soudure métallique employée dans l'industrie électronique et orientés dans des directions opposées pour former un dipôle. Pour la construction de la bobine à spires sur la grille, un fil d'or de 20 micromètre de diamètre sera employé, on aurait pu employer aussi du fil d'aluminium ou de cuivre palladium, pour réaliser les demi-spires de la bobine sur la face verso de la grille. Le diamètre de la demi-spire est de 400 micromètres, on emploie la technique des ultrasons classique dans l'industrie des semi-conducteurs pour connecter électriquement les fils d'or sur la grille. Ensuite sur la face recto de la grille, on réalise l'autre demi spire afin d'obtenir une bobine cylindrique à 15 spires de diamètre 400 micromètres.

Le nombre de spires de l'antenne primaire est déterminé de telle sorte que l'impédance électrique de l'antenne primaire soit adaptée à l'impédance électrique de la carte électronique comprenant au moins le circuit imprimé représenté par la grille et la puce électronique. Dans notre cas, l'impédance électrique de la puce électronique seule est un nombre complexe ayant une valeur par exemple de (10 - j^{∗}150) ohms. Ainsi une bobine de 15 spires de diamètre 400 micromètres correspond à une bonne adaptation de l'impédance électrique de la carte électronique construite sur une grille de connexions en cuivre.

La dernière étape de réalisation de la partie électronique 20 consiste à encapsuler le circuit imprimé, les composants qui lui sont connectés et l'antenne primaire à l'aide d'une résine époxy haute température, dans une masse rigide 30. Pour cela, on utilise la technologie du globtop bien connue d'un homme du métier. La masse rigide 30 forme une capsule protégeant la carte électronique du transpondeur radiofréquence 1.

Dans un autre mode de réalisation du dispositif électronique destiné à être placé à l'intérieur de l'antenne rayonnante 10, on commence tout d'abord par la réalisation de l'antenne primaire à l'aide d'un fil de cuivre de 180 micromètre revêtu d'une gaine thermoplastique isolante électriquement. On enroule ce fil sur un noyau tubulaire rigide et isolant électriquement en réalisant une bobine d'une dizaine de spires de diamètre extérieur de 1 millimètre avec un pas d'hélice de 0,2 millimètre se terminant par deux extrémités non revêtues. Il est alors possible d'évaluer la surface périphérique réelle s de l'antenne primaire à l'aide du diamètre du fil de cuivre, du diamètre extérieur de l'antenne, du pas d'hélice et du nombre total de spires. Dans ce cas, le rayon de la surface hélicoïdale est de 500 micromètres puisque l'antenne primaire est située à l'intérieur de l'antenne rayonnante 10.

On réalise la carte électronique à l'aide d'un support flexible. Dans une première variante, la puce électronique est fixée à l'aide d'une colle conductrice de type ACP (acronyme Anisotropic Conductive Paste) ne nécessitant pas de câblage électrique entre la puce et la carte électronique. Dans une seconde variante, la puce électronique est fixée à l'aide d'une colle non conductrice de montage de composants électroniques. Le câblage de la puce à la carte électronique est effectué par la technique de wire-bonding, c'est à-dire la réalisation d'un pont électrique par l'intermédiaire, par exemple, de fils en or de diamètre 20 micromètres positionnés entre la puce électronique et le support flexible représentant le circuit imprimé.

Ensuite on connecte les deux extrémités non revêtues de l'antenne primaire au circuit imprimé en utilisant une colle conductrice par exemple la H20E de la marque Tedella.

Enfin on recouvre la carte électronique et les terminaisons non revêtues de l'antenne primaire par un matériau rigide et isolant électriquement de type résine époxy haute température par la technique globtop bien connu des hommes du métier.

Dans une deuxième phase, correspondant au métier des télécommunications, on constitue l'antenne rayonnante 10 qui assurera la transmission et la réception des ondes radioélectriques avec le lecteur à émission radiofréquence.

Selon un premier mode de réalisation spécifique, la réalisation de l'antenne rayonnante est couplée à l'assemblage de cette même antenne rayonnante avec la partie électronique réalisée lors de la première phase afin de faciliter l'insertion de cette partie électronique au sein de l'antenne rayonnante.

Ainsi, on réalise tout d'abord une première partie de l'antenne rayonnante à l'aide d'une machine à enouler les ressorts délivrant un fil d'acier de diamètre externe de 150 micromètres qui est déformée plastiquement par déplacement imposée. Bien entendu, la machine peut être automatisée afin d'adapter la déformation appliquée pour modifier le diamètre d'enroulement et le pas d'hélice à chaque boucle du ressort hélicoïdal en cours de fabrication. Cette première partie de l'antenne rayonnante comprend nécessairement la première sous zone de la première zone de l'antenne rayonnante et la quasi-totalité de la deuxième zone de l'antenne rayonnante qui présentera un diamètre d'enroulement plus élevé. Et éventuellement le pas d'hélice des boucles de cette deuxième zone est différent de celui des boucles de la première zone du ressort hélicoïdal.

Après cette première étape, la fabrication du ressort hélicoïdal est stoppée afin de mettre en place la partie électronique réalisée lors de la première phase à l'intérieur de la première partie de l'antenne rayonnante réalisée. L'opération est effectuée sur la machine à enrouler les ressorts elle-même.

Elle nécessite tout d'abord de relaxer les contraintes dans le ressort hélicoïdal formé en libérant l'une des extrémités du ressort hélicoïdal. Ceci a pour effet de diminuer les précontraintes dans le ressort hélicoïdal conduisant à augmenter le diamètre d'enroulement du ressort réalisé. Ensuite la mise en place de la partie électronique dans cette première partie du ressort hélicoïdal relaxé est effectuée à l'aide d'un pistolet qui est positionné en lieu et place du doigt déformant le fil acier. Le changement d'outil est fait à l'aide de la rotation d'une broche dont les extrémités angulaires sont d'une part le pistolet et d'autre part le doigt de déformation du fil d'acier.

Cette mise en place consiste, par exemple, à la mise en appui de l'une des extrémités axiales de la partie électronique contre une boucle de la première partie de l'antenne rayonnante tout en assurant un parallélisme voire une coaxialité entre l'axe de révolution de la première partie de l'antenne rayonnante de l'axe de révolution de la partie électronique. De plus, le positionnement axial de la partie électronique au sein de la première partie de l'antenne rayonnante doit permettre de sensiblement centrer le plan médian de l'antenne primaire de la partie électronique par rapport à l'antenne rayonnante finale.

Cette mise en place est effectuée à l'aide d'un pistolet à propulsion mécanique. Cependant tout autre type de propulsion : magnétique, pneumatique, hydraulique ou en combinaison est envisageable. Ensuite, le doigt de déformation est remis en position, la partie électronique étant maintenue en position à l'aide de la deuxième zone de l'antenne rayonnante déjà réalisée.

Enfin la troisième étape consiste à reprendre la constitution du ressort hélicoïdal où on l'avait stoppé à la fin de la première étape avec la présence de la partie électronique. Apres avoir libéré la partie électronique de ses moyens de saisie et de positionnement et de les avoir évacué de la zone de réalisation du ressort hélicoïdal, on réalise la deuxième sous zone de la première partie de l'antenne rayonnante. Le fil d'acier est alors sectionné lorsque la longueur du ressort hélicoïdal a atteint la longueur L0 désirée

Selon un deuxième mode de réalisation du transpondeur radiofréquence non illustré à la figure 7, on réalise tout d'abord une antenne rayonnante sous la forme d'un ressort hélicoïdal monobrin comprenant une deuxième zone dans laquelle sera mise la partie électronique. Cette deuxième zone comprend un diamètre d'enroulement D2 et un pas d'hélice P2. Le ressort hélicoïdal comprend aussi deux segments d'une première zone de l'antenne rayonnante situés à chaque extrémité de la deuxième zone. Cette première zone est e par des hélices ayant un diamètre d'enroulement D1 et un pas d'hélice PI. Ce type de ressort hélicoïdal peut classiquement être fabriqué sur une machine à enrouler standard ayant des cycles de fabrication optimisés en temps.

Ensuite, vient l'étape d'assemblage de la partie électronique réalisée lors de la première phase dans l'antenne rayonnante constituée à l'étape précédente.

Dans un premier temps, il convient de repérer sur le ressort hélicoïdal réalisé à l'étape précédente, une zone de transition qui comprend généralement une spire entre la deuxième zone et un segment de la première zone de l'antenne rayonnante.

Le passage de la première zone à la deuxième zone se traduit par une variation du diamètre d'enroulement du fil accompagnée éventuellement d'une variation du pas d'hélice. Pour repérer cette zone de transition, il convient d'employer par exemple une caméra se focalisant sur quelques spires du ressort hélicoïdal. Idéalement on présente une extrémité du ressort hélicoïdal et on déplace le ressort hélicoïdal suivant son axe de révolution U devant le champ de la caméra. Un logiciel de traitement d'images ou l'œil humain permet d'observer le diamètre d'enroulement du ressort comme étant le cylindre circonscrit au ressort hélicoïdal d'axe de révolution U. On repère ainsi la variation du diamètre du cylindre correspondant à la zone de transition entre deux zones où le diamètre d'enroulement est constant.

On repère ensuite la dernière spire de la zone de transition qui est en contact avec la deuxième zone du ressort hélicoïdal où le diamètre d'enroulement est D2. Pour cela on déplace de nouveau par des allers retours successives le ressort hélicoïdal le long de l'axe de révolution U devant le champ de la caméra.

Par rapport à une droite de pliage du ressort défini sur la machine sur laquelle est monté le ressort hélicoïdal, il convient de positionner une extrémité radialement extérieure de la dernière spire de la zone de transition sur la droite de pliage. Pour cela, il convient à la fois de mouvoir le ressort hélicoïdal selon une direction suivant l'axe de révolution U du ressort. Eventuellement il faut mouvoir transversalement le ressort afin que la zone de pliage tangente le cylindre circonscrit au ressort hélicoïdal au niveau de la zone de transition. Enfin, il faut faire pivoter le ressort autour de son axe de révolution U jusqu'à une position où une extrémité de la dernière spire se trouve sur la droite de pliage. La position du ressort hélicoïdal est alors bloquée en rotation et déplacement.

On lance le cycle de la machine qui provoque le pliage du segment de la première zone du ressort hélicoïdal par rapport au reste du ressort hélicoïdal autour de la droite de pliage qui est perpendiculaire à l'axe de révolution U. Ce pliage d'un angle, classiquement de 90° pour nos applications où le diamètre du cylindre circonscrit à la partie électronique est proche du diamètre intérieur de la deuxième zone de l'antenne rayonnante, permet de générer une ouverture au niveau de l'extrémité de la deuxième zone du ressort hélicoïdal. Le diamètre inscrit de cette ouverture est supérieur ou égal au diamètre du cylindre circonscrit à la partie électronique permettant l'insertion aisée de la partie électronique.

On introduit la partie électronique dans la deuxième zone de l'antenne rayonnante par l'intermédiaire de l'ouverture. L'extrémité axiale de la partie électronique selon l'axe principale du cylindre circonscrit à la partie électronique doit être située à une distance inférieure au pas d'hélice de la deuxième zone du ressort hélicoïdal au-dessus d'un plan particulier. Ce plan dont la normale est l'axe de révolution de la partie du ressort hélicoïdal bloquée dans la machine passe par le point de pliage. Ainsi, la partie électronique, une fois insérée dans la deuxième zone de l'antenne rayonnante ne gêne nullement de repliement du segment de la première zone de l'antenne rayonnante. Idéalement, la partie électronique est entièrement en dessous du plan orthogonal.

On plie de nouveau le ressort hélicoïdal au niveau du point de pliage d'un second angle opposé au premier angle autour de l'axe perpendiculaire à l'axe de révolution de la partie du ressort hélicoïdal bloquée dans la machine. L'amplitude de cet angle est ici d'environ 105 degrés pour un fil en acier doux de diamètre 0,225 mm. L'amplitude est au moins égale ou supérieure à l'amplitude du premier angle. Les axes de révolution de la partie bloquée du ressort hélicoïdal et de la partie libre du ressort hélicoïdal sont alors colinéaires. Dans ce cas, le premier pliage du segment de la première zone provoque une plastification localisée de l'acier au niveau du point de pliage. Pour assurer que le ressort final présente un axe de révolution de forme droite, il convient de plastifier la zone autour du point de pliage lors du second pliage ce qui entraine une augmentation du second angle de pliage.

L'antenne rayonnante ainsi constituée munie de sa partie électronique parfaitement positionnée à l'intérieur représente le transpondeur radiofréquence selon l'invention. Optionnellement, l'introduction de la partie électronique dans la deuxième zone du ressort hélicoïdal se fait par une mise en appui de la seconde extrémité axiale de la partie électronique sur une spire de la seconde zone de transition entre les première et deuxième zones du ressort hélicoïdal. Cette mise en appui assure à la fois le positionnement axiale de la partie électronique au sein du ressort hélicoïdal et une coaxialité de l'antenne primaire de la partie électronique avec le ressort hélicoïdal.

La dernière phase, une fois le transpondeur radiofréquence 1 réalisé, est l'obtention d'un patch d'identification 2 pour faciliter une mise en application du transpondeur radiofréquence 1 dans des objets à identifier en partie constitués par des mélanges élastomères. On procède de la façon suivante pour cette phase.

On place le transpondeur radiofréquence 1 constitué à la phase précédente au centre d'une masse souple 3. Comme par exemple illustré dans la figure 5, le transpondeur radiofréquence 1 est pris en sandwich entre deux plaques 3a et 3b en matériau élastomère cru de dimensions fonction de celle du transpondeur radiofréquence 1 et une épaisseur comprise par exemple entre 2 et 5 millimètres. La direction longitudinale des plaques correspond à l'axe de l'antenne rayonnante 10. L'ensemble se situe au préalable sur la face interne d'une matrice métallique d'un outil de presse de dimension adaptée au volume de masse élastomère.

On applique à l'aide d'un poinçon métallique complémentaire de la matrice, un effort de compression au moyen d'un outil de presse, par exemple une presse uni axiale pneumatique, à l'ensemble afin de former une géométrie compacte présentant un axe de symétrie, de longueur par exemple de 60 millimètres, inscrit dans un cylindre de diamètre d'environ 20 millimètres correspondant à un patch d'identification 2 du transpondeur radiofréquence 1 selon l'invention.

D'autres procédés peuvent être employés pour incorporer le transpondeur radiofréquence 1, au sein d'une masse d'un ou plusieurs mélanges élastomères comme par exemple le procédé d'extrusion ou d'injection.

Dans un mode de réalisation particulier, on emploie des promoteurs d'adhésion bien connus de l'homme du métier entre la masse rigide 30 en résine époxy haute température encapsulant la partie électronique 20 du transpondeur radiofréquence 1 et le mélange élastomère du patch d'identification 2. Cela peut améliorer l'endurance du transpondeur radiofréquence en service.

Finalement, la mise en œuvre industrielle d'un transpondeur radiofréquence 1 selon l'invention pour un objet à identifier tel un bandage pneumatique peut être effectuée selon au moins deux modes de réalisation. Dans un premier mode de réalisation préférentielle, il suffit d'incorporer le transpondeur radiofréquence 1 ou le patch d'identification 2 en mélange élastomère cru dans l'ébauche du pneumatique lors de la confection du bandage pneumatique. On place géométriquement le transpondeur ou le patch d'identification 2 entre les divers composants élastomères de l'ébauche crue du bandage pneumatique. Idéalement, il est placé dans une zone géographique subissant des niveaux de déformations acceptables pour que l'antenne rayonnante 10 ne soit pas déformée plastiquement. L'ébauche subit les diverses phases de fabrication du pneumatique dont la cuisson en autoclave vulcanisant les différents mélanges élastomères et rendant solidaire le transpondeur ou le patch d'identification du bandage pneumatique ainsi réalisé. Le transpondeur radiofréquence 1 est alors prêt à l'emploi.

Un autre mode de réalisation préférentielle consiste à figer la structure élastomère du patch d'identification 2 par réticulation ou vulcanisation au cours d'une étape postérieure à la fabrication du patch d'identification 2. Le dispositif obtenu à la suite de cette opération est fixé sur une zone d'accueil du bandage pneumatique par une technique classique de fixation élastomère/élastomère connue de l'homme du métier comme par exemple l'adhésion par réticulation à froid d'une couche de gomme de liaison sur.la gomme intérieure du bandage pneumatique Le transpondeur radiofréquence 1 du pneumatique est alors prêt à l'emploi.

## Revendications

1. Transpondeur radiofréquence (1) de type passif destiné à être intégré à une masse en mélange élastomère comprenant :
- Une antenne rayonnante (10) dipôle constituée d'un ressort hélicoïdal mono brin présentant un axe de révolution (11), un diamètre d'enroulement (D1,D2), un pas d'hélice (P1,P2), un plan médian (19) un diamètre de fil définissant des diamètres intérieur (13) et extérieur (15) de l'antenne rayonnante (10), dont la longueur (L0) est adaptée pour communiquer sur une bande de fréquence avec un lecteur à émission radiofréquence et
- Une partie électronique (20) située à l'intérieur de l'antenne rayonnante (10) comprenant ;
i. Une puce électronique ;
ii. Une antenne primaire connectée électriquement à la puce électronique et couplée électro magnétiquement à l'antenne rayonnante (10) ;
iii. ladite antenne primaire, présentant un axe sensiblement parallèle à l'axe de révolution (11) de l'antenne rayonnante (10) ;
iv. ladite antenne primaire présentant un plan médian (21) qui est sensiblement superposé avec le plan médian (19) de l'antenne rayonnante (10) ; et
v. ladite antenne primaire étant circonscrite dans un cylindre dont l'axe de révolution est parallèle à l'axe de l'antenne primaire et dont le diamètre est supérieur ou égal au tiers du diamètre intérieur (13) de l'antenne rayonnante (10) située au droit de l'antenne primaire ;
**caractérisée en ce que,** un premier diamètre intérieur de l'antenne rayonnante correspondant au diamètre intérieur de l'antenne rayonnante (10) dans une première zone (101, 101a, 101b) non située au droit de la partie électronique (20) est inférieur au deuxième diamètre intérieur de l'antenne rayonnante (10) correspondant au diamètre intérieur de l'antenne rayonnante (10) dans une deuxième zone (102) située au droit de la partie électronique (20) **et en ce que** la partie électronique (20) étant circonscrite dans un cylindre dont l'axe de révolution est parallèle à l'axe de révolution (11) de l'antenne rayonnante et dont le diamètre est supérieur ou égal au premier diamètre intérieur de l'antenne rayonnante (10).

2. Transpondeur radiofréquence (1) selon la revendication 1 dans lequel le premier diamètre intérieur de l'antenne rayonnante (10) est constant.

3. Transpondeur radiofréquence (1) selon la revendication 1 dans lequel le premier diamètre intérieur de l'antenne rayonnante (10) est variable, préférentiellement continument variable.

4. Transpondeur radiofréquence (1) selon l'une quelconque des revendications précédentes dans lequel le rapport entre le pas d'hélice (P1) et le diamètre d'enroulement (D1) pour au moins une boucle du ressort hélicoïdal située dans la première zone (101,101a, 101b)de l'antenne rayonnante (10) est supérieur à 0,8.

5. Transpondeur radiofréquence (1) selon l'une quelconque des revendications précédentes dans lequel le rapport entre la pas d'hélice (P1) et le diamètre d'enroulement (D1) de chaque boucle du ressort hélicoïdal dans la première zone (101, 101a, 101b) de l'antenne rayonnante (10) est inférieur à 3.

6. Transpondeur radiofréquence (1) selon l'une quelconque des revendications précédentes dans lequel les deux dernières boucles du ressort hélicoïdal dans la première zone (101,101a, 101b) de l'antenne rayonnante (10) situées axialement, le plus extérieurement par rapport à la partie électronique (20) sont jointives sur au moins un tour.

7. Transpondeur radiofréquence (1) selon les revendications précédentes dans lequel, pour une deuxième zone (102) de l'antenne rayonnante (10) où ledit ressort hélicoïdal est située au droit de la partie électronique (20), le rapport du pas d'hélice (P2) sur le diamètre d'enroulement (D2) pour chaque boucle du ressort hélicoïdal est inférieur ou égal à 0,8.

8. Transpondeur radiofréquence (1) selon la revendication précédente dans lequel la communication radiofréquence avec le lecteur à émission radiofréquence s'effectue dans la gamme des UHF.

9. Transpondeur radiofréquence (1) selon la revendication précédente dans lequel la longueur (L0) de l'antenne rayonnante (10) est comprise entre 30 et 50 millimètres.

10. Transpondeur radiofréquence (1) selon l'une des revendications 8 à 9 dans lequel le diamètre d'enroulement (D1) de l'antenne rayonnante (10) dans la première zone (101, 101a, 101b) de l'antenne rayonnante (10) est compris entre 0,6 et 1,6 millimètres.

11. Transpondeur radiofréquence (1) selon l'une des revendications 8 à 10 dans lequel le pas d'hélice (P1) d'au moins une boucle de l'antenne rayonnante (10) dans la première zone (101, 101a, 101b) de l'antenne rayonnante (10) est compris entre 1 et 4 millimètres.

12. Transpondeur radiofréquence (1) selon les revendications 8 à 11 dans lequel le diamètre du fil de l'antenne rayonnante (10) est compris entre 0,05 et 0,25 millimètres.

13. Patch d'identification (2) comportant un transpondeur radiofréquence (1) selon l'une quelconque des revendications précédentes, dans lequel le transpondeur radiofréquence (1) est noyé dans au moins un mélange élastomère (3) souple et isolant électriquement.

14. Procédé de fabrication (5) d'un transpondeur radiofréquence (1) selon l'une des revendications 1 à 12 dans lequel :
- on connecte électriquement une puce électronique sur un circuit imprimé afin de constituer une carte électronique,
- on réalise à l'aide d'un fil conducteur une antenne primaire ;
- on connecte électriquement l'antenne primaire à la carte électronique ;
- on noie au moins une partie de l'antenne primiare et la carte électronique dans un masse rigide et isolante électriquement telle une résine thermodurcissable afin de constituer la partie électronique (20) dudit transpondeur radiofréquence (1) ;
- on réalise une première partie d'une antenne rayonnante de longueur L0 et d'axe de révolution U constituée par un ressort hélicoïdal, comprenant la première moitié (101a) de la première zone (101) de l'antenne rayonnante (10) et au moins une partie de la deuxième zone (102) de l'antenne rayonnante (10);
- on positionne axialement et radialement la partie électronique (20) par rapport à la première partie de l'antenne rayonnante (10) de telle façon que l'antenne primaire de la partie électronique (20) étant circonscrite dans un cylindre possédant un axe et un plan médian (21), l'axe de l'antenne primaire et l'axe de révolution (11) de l'antenne rayonnante (10) sont sensiblement parallèles, et le plan médian (21) de l'antenne primaire est sensiblement centré par rapport au milieu de la longueur L0 de l'antenne rayonnante (10).
- on finalise une seconde partie de l'antenne rayonnante comprenant au moins la seconde moitié (101b) de la première zone (101) de l'antenne rayonnante (10) afin de constituer le transpondeur radiofréquence (1).

15. Procédé de fabrication (5bis) d'un transpondeur radiofréquence (1) selon l'une des revendications 1 à 12 dans lequel
- on connecte électriquement une puce électronique sur un circuit imprimé afin de constituer une carte électronique,
- on réalise à l'aide d'un fil conducteur une antenne primaire ;
- on connecte électriquement l'antenne primaire à la carte électronique ;
- on noie au moins une partie de l'antenne primaire et la carte électronique dans un masse rigide et isolante électriquement telle une résine thermodurcissable afin de constituer la partie électronique (20) dudit transpondeur radiofréquence (1) ;
- on réalise une antenne rayonnante de longueur L0 et d'axe de révolution U constituée par un ressort hélicoïdal comprenant une deuxième zone (102) de l'antenne rayonnante (10), définie par un diamètre d'enroulement D2 et un pas d »hélice P2, comprise entre deux parties de la première zone (101a, 101b) de l'antenne rayonnante (10), définie par un diamètre d'enroulement D1 et un pas d'hélice PI;
- on identifie une zone de transition comprenant au moins une spire du ressort hélicoïdal entre une partie de la première zone (101a, 101b) et la deuxième zone (102) de l'antenne rayonnante (10) à l'aide de moyens de détection de la variation du diamètre d'enroulement ;
- on identifie un point de pliage sur la au moins une spire de la zone de transition, préférentiellement situé sur la moitié de la spire se situant la plus proche de la deuxième zone (102) de l'antenne rayonnante (10) ;
- on effectue un pliage du ressort hélicoïdal d'un premier angle autour d'un axe perpendiculaire à l'axe de révolution U passant par le point de pliage entre les parties du ressort hélicoïdal situées en amont et en aval du point de pliage afin de constituer une ouverture dans la partie amont, comprenant la deuxième zone (102) de l'antenne rayonnante, dont le diamètre inscrit est supérieur ou égal au diamètre du cylindre circonscrit à la partie électronique ;
- on introduit la partie électronique dans la partie amont du ressort hélicoïdal par l'intermédiaire de l'ouverture de sorte que l'extrémité axiale du cylindre circonscrit à la partie électronique disposée le plus extérieurement par rapport à la partie amont du ressort hélicoïdal soit située à une distance inférieure au pas d'hélice P2 au-dessus d'un plan dont la normale est l'axe de révolution de la partie amont passant par le point de pliage
- on plie de nouveau le ressort hélicoïdal au niveau du point de pliage d'un second angle opposé au premier angle autour de l'axe perpendiculaire à l'axe de révolution de la partie amont du ressort hélicoïdal passant par le point de pliage dont l'amplitude est au moins égale ou supérieure à l'amplitude du premier angle de sorte que les axes de révolutions des parties amont et aval du ressort hélicoïdal soient colinéaires afin de constituer le transpondeur radiofréquence (1).

16. Procédé de fabrication (5, 5bis) d'un transpondeur radiofréquence (1) selon l'une des revendications 14 à 15 dans lequel l'étape de positionnement de la partie électronique (20) se fait par une mise en appui de la partie électronique (20) sur la boucle de la première zone (101a) de l'antenne rayonnante (10) se situant le plus intérieurement par rapport au plan médian (19) de l'antenne rayonnante (10).

17. Procédé de fabrication (5,5bis) d'un transpondeur radiofréquence (1) selon l'une des revendications 14 à 16 comprenant une étape d'ajouter un circuit galvanique additionnel sur la carte électronique en forme de méandre afin d'adapter l'impédance de ladite antenne primaire à l'impédance électrique de ladite carte électronique.

18. Procédé de fabrication (6) d'un patch d'identification (2) selon la revendication 13 dans lequel le transpondeur radiofréquence (1) est incorporé dans une masse d'au moins un mélange élastomère souple (3) et isolante électriquement par un procédé d'injection, d'extrusion ou de compression."

## Patentansprüche

1. Hochfrequenztransponder (1) vom passiven Typ, der dazu bestimmt ist, in eine Masse aus Elastomermischung integriert zu werden, umfassend:
- Eine abstrahlende Dipolantenne (10), die aus einer einsträngigen Schraubenfeder besteht, die eine Rotationsachse (11), einen Windungsdurchmesser (D1, D2), eine Steigung (P1, P2), eine Mittelebene (19), einen Drahtdurchmesser, der Innendurchmesser (13) und Außendurchmesser (15) der abstrahlenden Antenne (10) definiert, aufweist, deren Länge (L0) angepasst ist, um über ein Frequenzband mit einem Hochfrequenzemissionslesegerät zu kommunizieren, und
- Einen Elektronikteil (20), der im Inneren der abstrahlenden Antenne (10) gelegen ist, umfassend:
i. Einen elektronischen Chip;
ii. Eine Primärantenne, die elektrisch mit dem elektronischen Chip verbunden ist und elektromagnetisch mit der abstrahlenden Antenne (10) gekoppelt ist;
iii. wobei die Primärantenne eine Achse aufweist, die im Wesentlichen parallel zur Rotationsachse (11) der abstrahlenden Antenne (10) ist;
iv. wobei die Primärantenne eine Mittelebene (21) aufweist, die im Wesentlichen der Mittelebene (19) der abstrahlenden Antenne (10) überlagert ist; und
v. wobei die Primärantenne in einen Zylinder einbeschrieben ist, dessen Rotationsachse parallel zur Achse der Primärantenne ist und dessen Durchmesser größer als oder gleich einem Drittel des Innendurchmessers (13) der abstrahlenden Antenne (10) ist, die lotrecht zur Primärantenne gelegen ist;
**dadurch gekennzeichnet, dass** ein erster Innendurchmesser der abstrahlenden Antenne, der dem Innendurchmesser der abstrahlenden Antenne (10) in einem ersten Bereich (101, 101a, 101b) entspricht, der nicht lotrecht zum Elektronikteil (20) gelegen ist, kleiner als der zweite Innendurchmesser der abstrahlenden Antenne (10) ist, der dem Innendurchmesser der abstrahlenden Antenne (10) in einem zweiten Bereich (102) entspricht, der lotrecht zum Elektronikteil (20) gelegen ist, und dass der Elektronikteil (20) in einen Zylinder einbeschrieben ist, dessen Rotationsachse parallel zur Rotationachse (11) der abstrahlenden Antenne ist und dessen Durchmesser größer als oder gleich dem ersten Innendurchmesser der abstrahlenden Antenne (10) ist.

2. Hochfrequenztransponder (1) nach Anspruch 1, bei dem der erste Innendurchmesser der abstrahlenden Antenne (10) konstant ist.

3. Hochfrequenztransponder (1) nach Anspruch 1, bei dem der erste Innendurchmesser der abstrahlenden Antenne (10) variabel, bevorzugt kontinuierlich variabel ist.

4. Hochfrequenztransponder (1) nach einem der vorhergehenden Ansprüche, bei dem das Verhältnis zwischen der Steigung (P1) und dem Windungsdurchmesser (D1) für mindestens eine Windung der Schraubenfeder, die im ersten Bereich (101, 101a, 101b) der abstrahlenden Antenne (10) gelegen ist, größer als 0,8 ist.

5. Hochfrequenztransponder (1) nach einem der vorhergehenden Ansprüche, bei dem das Verhältnis zwischen der Steigung (P1) und dem Windungsdurchmesser (D1) jeder Windung der Schraubenfeder im ersten Bereich (101, 101a, 101b) der abstrahlenden Antenne (10) kleiner als 3 ist.

6. Hochfrequenztransponder (1) nach einem der vorhergehenden Ansprüche, bei dem die beiden letzten Windungen der Schraubenfeder im ersten Bereich (101, 101a, 101b) der abstrahlenden Antenne (10), die in Bezug auf den Elektronikteil (20) axial am weitesten außen gelegen sind, über mindestens einen Umlauf aneinander anliegen.

7. Hochfrequenztransponder (1) nach den vorhergehenden Ansprüchen, bei dem für einen zweiten Bereich (102) der abstrahlenden Antenne (10), in dem die Schraubenfeder lotrecht zum Elektronikteil (20) gelegen ist, das Verhältnis der Steigung (P2) zum Windungsdurchmesser (D2) für jede Windung der Schraubenfeder kleiner als oder gleich 0,8 ist.

8. Hochfrequenztransponder (1) nach dem vorhergehenden Anspruch, bei dem die Hochfrequenzkommunikation mit dem Hochfrequenzemissionslesegerät im UHF-Bereich stattfindet.

9. Hochfrequenztransponder (1) nach dem vorhergehenden Anspruch, bei dem die Länge (L0) der abstrahlenden Antenne (10) zwischen 30 und 50 Millimeter beträgt.

10. Funkfrequenztransponder (1) nach einem der Ansprüche 8 bis 9, bei dem der Windungsdurchmesser (D1) der abstrahlenden Antenne (10) im ersten Bereich (101, 101a, 101b) der abstrahlenden Antenne (10) zwischen 0,6 und 1,6 Millimeter beträgt.

11. Funkfrequenztransponder (1) nach einem der Ansprüche 8 bis 10, bei dem die Steigung (P1) mindestens einer Windung der abstrahlenden Antenne (10) im ersten Bereich (101, 101a, 101b) der abstrahlenden Antenne (10) zwischen 1 und 4 Millimeter beträgt.

12. Hochfrequenztransponder (1) nach den Ansprüchen 8 bis 11, bei dem der Durchmesser des Drahts der abstrahlenden Antenne (10) zwischen 0,05 und 0,25 Millimeter beträgt.

13. Identifikationsflicken (2) mit einem Hochfrequenztransponder (1) nach einem der vorhergehenden Ansprüche, bei dem der Hochfrequenztransponder (1) in mindestens eine flexible und elektrisch isolierende Elastomermischung (3) eingebettet ist.

14. Herstellungsverfahren (5) für einen Hochfrequenztransponder (1) nach einem der Ansprüche 1 bis 12, bei dem:
- ein elektronischer Chip elektrisch mit einer gedruckten Schaltung verbunden wird, um eine elektronische Platine zu bilden,
- mithilfe eines leitfähigen Drahts eine Primärantenne ausgeführt wird;
- die Primärantenne elektrisch mit der elektronischen Platine verbunden wird;
- mindestens ein Teil der Primärantenne und die elektronische Platine in eine starre und elektrisch isolierende Masse wie ein wärmehärtbares Harz eingebettet werden, um den Elektronikteil (20) des Hochfrequenztransponders (1) zu bilden;
- ein erster Teil einer abstrahlenden Antenne mit der Länge L0 und der Rotationsachse U, die aus einer Schraubenfeder besteht, ausgeführt wird, der die erste Hälfte (101a) des ersten Bereichs (101) der abstrahlenden Antenne (10) und mindestens einen Teil des zweiten Bereichs (102) der abstrahlenden Antenne (10) umfasst;
- der Elektronikteil (20) axial und radial in Bezug auf den ersten Teil der abstrahlenden Antenne (10) derart positioniert wird, dass die Primärantenne des Elektronikteils (20) in einen Zylinder einbeschrieben ist, der eine Achse und eine Mittelebene (21) besitzt, wobei die Achse der Primärantenne und die Rotationsachse (11) der abstrahlenden Antenne (10) im Wesentlichen parallel sind und die Mittelebene (21) der Primärantenne im Wesentlichen in Bezug auf die Mitte der Länge L0 der abstrahlenden Antenne (10) zentriert ist;
- ein zweiter Teil der abstrahlenden Antenne fertigbearbeitet wird, der mindestens die zweite Hälfte (101b) des ersten Bereichs (101) der abstrahlenden Antenne (10) umfasst, um den Hochfrequenztransponder (1) zu bilden.

15. Herstellungsverfahren (5bis) für einen Hochfrequenztransponder (1) nach einem der Ansprüche 1 bis 12, bei dem
- ein elektronischer Chip elektrisch mit einer gedruckten Schaltung verbunden wird, um eine elektronische Platine zu bilden,
- mithilfe eines leitfähigen Drahts eine Primärantenne ausgeführt wird;
- die Primärantenne elektrisch mit der elektronischen Platine verbunden wird;
- mindestens ein Teil der Primärantenne und die elektronische Platine in eine starre und elektrisch isolierende Masse wie ein wärmehärtbares Harz eingebettet werden, um den Elektronikteil (20) des Hochfrequenztransponders (1) zu bilden;
- eine abstrahlende Antenne mit der Länge L0 und der Rotationsachse U, die aus einer Schraubenfeder besteht, ausgeführt wird, die einen zweiten Bereich (102) der abstrahlenden Antenne (10) umfasst, der durch einen Windungsdurchmesser D2 und eine Steigung P2 definiert ist, der zwischen zwei Teilen des ersten Bereichs (101a, 101b) der abstrahlenden Antenne (10) enthalten ist, der durch einen Windungsdurchmesser D1 und eine Steigung PI definiert ist;
- ein Übergangsbereich, der mindestens eine Wicklung der Schraubenfeder zwischen einem Teil des ersten Bereichs (101a, 101b) und dem zweiten Bereich (102) der abstrahlenden Antenne (10) umfasst, mithilfe von Einrichtungen zur Detektion der Änderung des Windungsdurchmessers identifiziert wird;
- eine Biegestelle an der mindestens einen Wicklung des Übergangsbereichs identifiziert wird, die bevorzugt auf der Hälfte der Wicklung gelegen ist, die dem zweiten Bereich (102) der abstrahlenden Antenne (10) nächstgelegen ist;
- ein Biegen der Schraubenfeder um einen ersten Winkel um eine Achse senkrecht zur Rotationsachse U, die durch die Biegestelle zwischen den stromauf und stromab der Biegestelle gelegenen Teilen der Schraubenfeder verläuft, durchgeführt wird, um eine Öffnung im stromaufwärtigen Teil zu bilden, der den zweiten Bereich (102) der abstrahlenden Antenne umfasst, dessen einbeschriebener Durchmesser größer als oder gleich dem Durchmesser des dem Elektronikteil umbeschriebenen Zylinders ist;
- der Elektronikteil in den stromaufwärtigen Teil der Schraubenfeder durch die Öffnung eingeführt wird, so dass das axiale Ende des dem Elektronikteil umschriebenen Zylinders, das in Bezug auf den stromaufwärtigen Teil der Schraubenfeder am weitesten außen gelegen ist, in einem Abstand, der geringer als die Steigung P2 ist, über einer Ebene gelegen ist, deren Senkrechte die Rotationsachse des stromaufwärtigen Teils ist, die durch die Biegestelle verläuft
- die Schraubenfeder an der Biegestelle erneut um einen zweiten Winkel, der entgegengesetzt zum ersten Winkel ist, um die Achse senkrecht zur Rotationsachse des stromaufwärtigen Teils der Schraubenfeder, die durch die Biegestelle verläuft, gebogen wird, dessen Amplitude mindestens gleich oder größer als die Amplitude des ersten Winkels ist, so dass die Rotationsachsen der stromaufwärtigen und stromabwärtigen Teile der Schraubenfeder kollinear sind, um den Hochfrequenztransponder (1) zu bilden.

16. Herstellungsverfahren (5, 5bis) für einen Hochfrequenztransponder (1) nach einem der Ansprüche 14 bis 15, bei dem der Schritt des Positionierens des Elektronikteils (20) durch ein Auflegen des Elektronikteils (20) auf die Windung des ersten Bereichs (101a) der abstrahlenden Antenne (10) erfolgt, die in Bezug auf die Mittelebene (19) der abstrahlenden Antenne (10) am weitesten innen gelegen ist.

17. Herstellungsverfahren (5, 5bis) für einen Hochfrequenztransponder (1) nach einem der Ansprüche 14 bis 16, umfassend einen Schritt des Hinzufügens einer zusätzlichen galvanischen Schaltung auf der elektronischen Platine in Form eines Mäanders, um die Impedanz der Primärantenne an die elektrische Impedanz der elektronischen Platine anzupassen.

18. Herstellungsverfahren (6) für einen Identifikationsflicken (2) nach Anspruch 13, bei dem der Hochfrequenztransponder (1) in eine Masse aus mindestens einer flexiblen (3) und elektrisch isolierenden Elastomermischung mit einem Spritz-, Extrusions- oder Pressverfahren eingearbeitet wird.

## Claims

1. Passive radiofrequency transponder (1) intended to be integrated into a mass made of elastomer blend, comprising:
- a radiating dipole antenna (10) consisting of a single-strand helical spring having an axis of revolution (11), a winding diameter (D1, D2), a helix pitch (PI, P2), a median plane (19) and a wire diameter defining inside (13) and outside (15) diameters of the radiating antenna (10), the length (L0) of which is suitable for communication in a frequency band with a radiofrequency-transmitting reader, and
- an electronic portion (20) located inside the radiating antenna (10), comprising:
i. an electronic chip;
ii. a primary antenna electrically connected to the electronic chip and electromagnetically coupled to the radiating antenna (10);
iii. said primary antenna having an axis substantially parallel to the axis of revolution (11) of the radiating antenna (10);
iv. said primary antenna having a median plane (21) which is substantially superposed with the median plane (19) of the radiating antenna (10); and
v. said primary antenna being circumscribed by a cylinder the axis of revolution of which is parallel to the axis of the primary antenna and the diameter of which is larger than or equal to one third of the inside diameter (13) of the radiating antenna (10), located plumb with the primary antenna;
**characterized in that** a first inside diameter of the radiating antenna corresponding to the inside diameter of the radiating antenna (10) in a first region (101, 101a, 101b) not located plumb with the electronic portion (20) is smaller than the second inside diameter of the radiating antenna (10) corresponding to the inside diameter of the radiating antenna (10) in a second region (102) located plumb with the electronic portion (20) and **in that** the electronic portion (20) is circumscribed by a cylinder the axis of revolution of which is parallel to the axis of revolution (11) of the radiating antenna and the diameter of which is larger than or equal to the first inside diameter of the radiating antenna (10).

2. Radiofrequency transponder (1) according to Claim 1, wherein the first inside diameter of the radiating antenna (10) is constant.

3. Radiofrequency transponder (1) according to Claim 1, wherein the first inside diameter of the radiating antenna (10) is variable, and preferably continuously variable.

4. Radiofrequency transponder (1) according to one of the preceding claims, wherein the ratio between the helix pitch (P1) and the winding diameter (D1) for at least one loop of the helical spring located in the first region (101, 101a, 101b) of the radiating antenna (10) is higher than 0.8.

5. Radiofrequency transponder (1) according to any one of the preceding claims, wherein the ratio between the helix pitch (P1) and the winding diameter (D1) of each loop of the helical spring in the first region (101, 101a, 101b) of the radiating antenna (10) is lower than 3.

6. Radiofrequency transponder (1) according to any one of the preceding claims, wherein the last two loops of the helical spring in the first region (101, 101a, 101b) of the radiating antenna (10), i.e. the loops that are located axially outermost with respect to the electronic portion (20), adjoin over at least one turn.

7. Radiofrequency transponder (1) according to the preceding claims, wherein, in a second region (102) of the radiating antenna (10) in which said helical spring is located plumb with the electronic portion (20), the ratio of the helix pitch (P2) to the winding diameter (D2) for each loop of the helical spring is lower than or equal to 0.8.

8. Radiofrequency transponder (1) according to the preceding claim, wherein the radiofrequency communication with the radiofrequency-transmitting reader occurs in the UHF range.

9. Radiofrequency transponder (1) according to the preceding claim, wherein the length (L0) of the radiating antenna (10) is comprised between 30 and 50 millimetres.

10. Radiofrequency transponder (1) according to either of Claims 8 and 9, wherein the winding diameter (D1) of the radiating antenna (10) in the first region (101, 101a, 101b) of the radiating antenna (10) is comprised between 0.6 and 1.6 millimetres.

11. Radiofrequency transponder (1) according to one of Claims 8 to 10, wherein the helix pitch (P1) of at least one loop of the radiating antenna (10) in the first region (101, 101a, 101b) of the radiating antenna (10) is comprised between 1 and 4 millimetres.

12. Radiofrequency transponder (1) according to Claims 8 to 11, wherein the wire diameter of the radiating antenna (10) is comprised between 0.05 and 0.25 millimetres.

13. Identification tag (2) comprising a radiofrequency transponder (1) according to any one of the preceding claims, wherein the radiofrequency transponder (1) is embedded in at least one supple and electrically insulating elastomer blend (3).

14. Process (5) for manufacturing a radiofrequency transponder (1) according to one of Claims 1 to 12, wherein:
• an electronic chip is electrically connected to a printed circuit board in order to form a circuit board;
• a primary antenna is produced using a conductive wire;
• the primary antenna is electrically connected to the circuit board;
• at least one portion of the primary antenna and the circuit board are embedded in a stiff and electrically insulating mass such as a heat-curable resin, in order to form the electronic portion (20) of said radiofrequency transponder (1);
• a primary portion of a radiating antenna of length L0 and of axis of revolution U consisting of a helical spring is produced, comprising the first half (101a) of the first region (101) of the radiating antenna (10) and at least a portion of the second region (102) of the radiating antenna (10);
• the electronic portion (20) is positioned axially and radially with respect to the primary portion of the radiating antenna (10) in such a way that the primary antenna of the electronic portion (20) is circumscribed by a cylinder having an axis and a median plane (21), the axis of the primary antenna and the axis of revolution (11) of the radiating antenna (10) being substantially parallel and the median plane (21) of the primary antenna being substantially centred with respect to the middle of the length L0 of the radiating antenna (10);
• a secondary portion of the radiating antenna is finalized, comprising at least the second half (101b) of the first region (101) of the radiating antenna (10) in order to form the radiofrequency transponder (1).

15. Process (5bis) for manufacturing a radiofrequency transponder (1) according to one of Claims 1 to 12, wherein:
• an electronic chip is electrically connected to a printed circuit board in order to form a circuit board;
• a primary antenna is produced using a conductive wire;
• the primary antenna is electrically connected to the circuit board;
• at least one portion of the primary antenna and the circuit board are embedded in a stiff and electrically insulating mass such as a heat-curable resin, in order to form the electronic portion (20) of said radiofrequency transponder (1);
• a radiating antenna of length L0 and of axis of revolution U consisting of a helical spring comprising a second region (102) of the radiating antenna (10), defined by a winding diameter D2 and a helix pitch P2, is produced between two portions of the first region (101a, 101b) of the radiating antenna (10), which region is defined by a winding diameter D1 and a helix pitch PI;
• a region, comprising at least one turn of the helical spring, of transition between one portion of the first region (101a, 101b) and the second region (102) of the radiating antenna (10) is identified using means for detecting the variation in the winding diameter;
• a bending point in the at least one turn of the region of transition is identified, this point preferably being located in the half of the turn that is located closest to the second region (102) of the radiating antenna (10);
• the helical spring is bent by a first angle about an axis perpendicular to the axis of revolution U passing through the bending point between the portions of the helical spring that are located upstream and downstream of the bending point, in order to create an opening in the upstream portion, which comprises the second region (102) of the radiating antenna, the inscribed diameter of which is larger than or equal to the diameter of the cylinder circumscribing the electronic portion;
• the electronic portion is inserted into the upstream portion of the helical spring via the opening, so that that axial end of the cylinder circumscribing the electronic portion which is located outermost with respect to the upstream portion of the helical spring is located at a distance smaller than the helix pitch P2 above a plane the normal of which is the axis of revolution of the upstream portion passing through the bending point;
• the helical spring is bent again at the bending point by a second angle opposite to the first angle about the axis perpendicular to the axis of revolution of the upstream portion of the helical spring passing through the bending point and the amplitude of which is at least equal to or larger than the amplitude of the first angle, so that the axes of revolution of the upstream and downstream portions of the helical spring are collinear in order to form the radiofrequency transponder (1).

16. Process (5, 5bis) for manufacturing a radiofrequency transponder (1) according to either of Claims 14 and 15, wherein the step of positioning the electronic portion (20) is carried out by placing the electronic portion (20) into abutment against the loop of the first region (101a) of the radiating antenna (10) located innermost with respect to the median plane (19) of the radiating antenna (10).

17. Process (5, 5bis) for manufacturing a radiofrequency transponder (1) according to one of Claims 14 to 17 comprising a step of adding to the circuit board an additional galvanic circuit of meander shape in order to match the impedance of said primary antenna to the electrical impedance of said circuit board.

18. Process (6) for manufacturing an identification tag (2) according to Claim 13, in which the radiofrequency transponder (1) is incorporated into a mass of at least one supple and electrically insulating elastomer blend (3) using an injection-moulding, extrusion or compression-moulding process.
